Europäisches Patentamt

European Patent Office

Office européen des brevets

(19)

(11) **EP 1 158 735 A1**

(12) ## EUROPEAN PATENT APPLICATION

(43) Date of publication:
**28.11.2001 Bulletin 2001/48**

(51) Int Cl.⁷: **H04L 12/64**, G06F 13/40,
H04L 12/40

(21) Application number: **00111169.9**

(22) Date of filing: **24.05.2000**

| | |
|---|---|
| (84) Designated Contracting States:<br>**AT BE CH CY DE DK ES FI FR GB GR IE IT LI LU**<br>**MC NL PT SE**<br>Designated Extension States:<br>**AL LT LV MK RO SI**<br><br>(71) Applicant: **MOTOROLA, INC.**<br>**Schaumburg, IL 60196 (US)** | (72) Inventor: **Tschumi, Alfred**<br>**4704 Niederbipp (CH)**<br><br>(74) Representative: **Gibson, Sarah Jane**<br>**Motorola GmbH**<br>**Law Dept. Intellectual Property Section,**<br>**Hagenauer Strasse 47**<br>**65203 Wiesbaden (DE)** |

(54) **TDMA bus interface, system for communicating data, and method**

(57)     The present invention generally relates to TDMA communications networks, in particular to a method, an interface and a system for communicating data between a first and a second plurality of communication devices over a TDMA bus. The bus has a plurality of time slots, where one asynchronous data channel with data from one of the first plurality of communication devices is received by a first TDMA interface, the one asynchronous data channel is converted into a synchronous serial data stream and the synchronous serial data stream is forwarded to one plurality of time slots of the TDMA bus by the first TDMA interface, the synchronous serial data stream in the one time slot is received by a second TDMA interface, and the synchronous serial data stream is converted into one asynchronous data channel and the asynchronous data channel is forwarded to the second plurality of communication devices by the second TDMA interface.

FIG. 4

EP 1 158 735 A1

**Description**

Field of the Invention

The present invention generally relates to TDMA communications networks, in particular though not exclusively to a method, an interface and a system for communicating data between a first and a second plurality of communication devices over a TDMA bus having a plurality of time slots.

Background of the Invention

TDMA bus systems are well known in the art. It is a drawback of such systems, however, that the number of available time slots is fixed even when the number of requests for communications resources varies.

The present invention seeks to provide a concept and a design to integrate several asynchronous data channels into a TDMA bus, in particular a GSM-R bus and to mitigate or avoid the disadvantages and limitations of the prior art.

Summary of the Invention

The invention is based on that one time slot of the TDMA bus is used for upstream traffic (sending data) and another time slot of the TDMA bus is used for downstream traffic (receiving data). The data from the asynchronous streams is transferred absolutely transparent for the user over the TDMA bus to another device. In the receiving device the data are separated and propagated according to the transmitting data channel. For merging more than one data channel to the TDMA bus a protocol with 4 address and 8 data bits is created. It handles the flow control on the bus and helps to separate the received data. In the coarse top down design the circuit is divided into UARTs, a TDMA bridge, a bus multiplexer and TDMA master bus controller. The sub-blocks represent itself logical units that can be implemented separately.

According to a first aspect of the invention there is provided a method for communicating data between a first and a second plurality of communication devices over a TDMA bus having a plurality of time slots, said method comprising the steps of: receiving at least one asynchronous data channel with data from at least one of said first plurality of communication devices by a first TDMA interface, converting said at least one asynchronous data channel into a synchronous serial data stream and outputting said synchronous serial data stream into one of said plurality of time slots of said TDMA bus by said first TDMA interface, receiving said synchronous serial data stream in said one time slot of said TDMA bus by a second TDMA interface, converting said synchronous serial data stream into at least one asynchronous data channel and outputting said at least one asynchronous data channel to at least one of said second plurality of communication devices by said second TDMA interface, wherein said synchronous serial data stream has a frame structure comprising an address portion identifying said one of said first plurality of communication devices transmitting said asynchronous data channel and a data portion including said data from said asynchronous data channel.

Preferably said address portion comprises a predetermined first number of bits and said data portion comprises a predetermined second number of bits. In another preferred embodiment said address portion comprises a predetermined number of bits, said data portion comprises a variable number of bits, and said synchronous serial data stream comprises additionally a frame size portion specifying the variable number of bits of said data portion as a function of the amount of transmitted data.

In still another preferred embodiment said data stream in the direction from said first plurality of communication devices to said second plurality of communication devices is output by said first TDMA interface into a first time slot of said TDMA bus and said data stream in the direction from said second plurality of communication devices to said first plurality of communication devices is output by said second TDMA interface into a second time slot of said TDMA bus.

In still another preferred embodiment said address portion identifies said one of said second plurality of communication devices receiving said data channel. In still another preferred embodiment the data portion is interpreted as carrying no data when a predetermined sequence of bits occurs in said address portion. In still another preferred embodiment said address portion comprises 4 bits and/or said data portion comprises 8 bits. The method according to the invention is particularly advantageous, if said TDMA interface is a parallel-TDMA-interface. The method according to the invention is advantageously applicable, if said TDMA interface is a RS232-TDMA-interface. In particular, the method according to the invention is applicable, if said TDMA bus is a GSM-R-bus.

As a second aspect of the present invention there is provided a TDMA interface for integrating a plurality of asynchronous data channels into one TDMA bus having a plurality of time slots, said TDMA interface comprising: a TDMA bridge device having an internal parallel port for communicating parallel data over an internal parallel data bus and an external serial port for communicating serial data over said TDMA bus and for combining said parallel data on said internal parallel data bus to form a synchronous serial data stream on said TDMA bus, a plurality of asynchronous receiver transmitter means (UART), each having a first port for reading data in a parallel format from and writing data in a parallel format to said internal parallel data bus and a second port for reading data in a predetermined format from and writing data in said predetermined format to an external data bus, a parallel bus multiplexer for connecting selectively each of said asynchronous receiver transmitter means to said TDMA bridge device, wherein said TDMA bridge device provides said synchronous serial data stream at said external serial port in a predetermined first time slot of said TDMA bus and reads said synchronous serial data stream at said external serial port in a predetermined second time slot of said TDMA bus.

In a preferred embodiment the TDMA interface comprises a TDMA bus master controller for generating clock signals and synchronization signals for said TDMA bus. In another preferred embodiment of the TDMA interface said TDMA bridge device comprises a TDMA slot controller for reading said predetermined time slot of said TDMA bus, a protocol encoder block for generating a request to a specific asynchronous receiver transmitter means for writing data to said internal parallel bus, setting the parallel bus multiplexer so as to connect said specific asynchronous receiver transmitter means with said TDMA bridge device and adding a protocol to said data from specific asynchronous receiver transmitter means and transmitting said data and protocol to said TDMA slot controller, and a protocol decoder for reading data from said TDMA slot controller and removing a protocol overhead and sending said data to the specific asynchronous receiver transmitter means configured by address received in the protocol data frame.

As a third aspect of the present invention there is provided a system for communicating data between a first and a second plurality of communication devices over a TDMA bus having a plurality of time slots, said method comprising: a first TDMA interface for receiving at least one asynchronous data channel with data from at least one of said first plurality of communication devices and for converting said at least one asynchronous data channel into a synchronous serial data stream and outputting said synchronous serial data stream into one of said plurality of time slots of said TDMA bus, a second TDMA interface for receiving said synchronous serial data stream in said one time slot of said TDMA bus by and for converting said synchronous serial data stream into at least one asynchronous data channel and outputting said at least one asynchronous data channel to at least one of said second plurality of communication devices, wherein said synchronous serial data stream has a frame structure comprising an address portion identifying said one of said first plurality of communication devices transmitting said asynchronous data channel and a data portion including said data from said asynchronous data channel.

In a preferred embodiment of the system according to the invention said address portion comprises a predetermined first number of bits and said data portion comprises a predetermined second number of bits.

In another preferred embodiment of the system said address portion comprises a predetermined number of bits, said data portion comprises a variable number of bits, and said synchronous serial data stream comprises additionally a frame size portion specifying the variable number of bits of said data portion as a function of the amount of transmitted data.

In still another preferred embodiment of the system said data stream in the direction from said first plurality of communication devices to said second plurality of communication devices is output by said first TDMA interface into a first time slot of said TDMA bus and said data stream in the direction from said second plurality of communication devices to said first plurality of communication devices is output by said second TDMA interface into a second time slot of said TDMA bus.

Preferably said address portion identifies said one of said second plurality of communication devices receiving said data channel in a preferred embodiment of the system according to the invention.

A memory for storing a predetermined sequence of bits indicating that no data are carried when it occurs in said address portion may be provided. Said address memory may advantageously comprise a 4 bit register and said data memory may preferably comprise a 8 bit register.

The system according to the invention is particularly advantageous, if said TDMA interface is a parallel-TDMA-interface or if said TDMA interface is a RS232-TDMA-interface. A specific application of the system according to the invention is in connection with a GSM-R-bus as said TDMA bus. In particular, one of the TDMA-interfaces may be a CPU, which directly receives and transmits data over said TDMA bus.

Among other advantages the invention provides a method, a system and an interface which is highly flexible in its response to varying traffic and easy to implement without any changes to existing TDMA bus protocol.

Brief Description of the Drawings

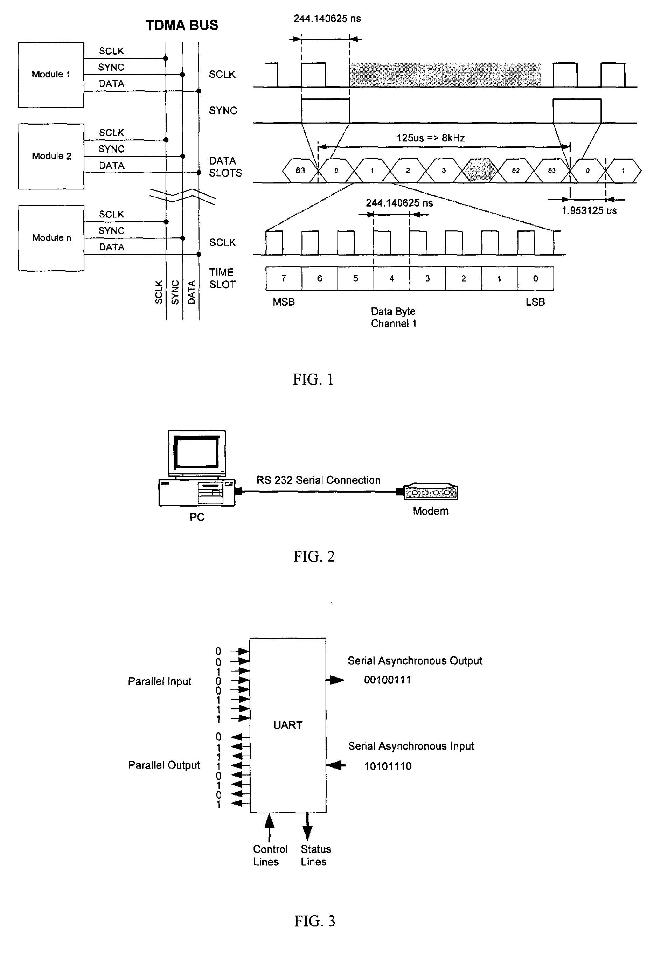

Figure 1      illustrates the TDMA Principle;
Figure 2      illustrates an RS 232 Serial Connection;

Figure 3    illustrates the UART Principle;

Figure 4    is an Overview of the Data Communication according to the invention;

Figure 5    illustrates the Dependency of the Number of UARTs on the Data Rate according to the invention;

Figure 6    illustrates an Example of the protocol data frame according to the invention;

Figure 7    illustrates the Principle of the System according to the invention;

Figure 8    illustrates a Data frame with 3 address and 8 data bits according to the invention;

Figure 9    illustrates the Timing with 3 address and 8 data bits;

Figure 10    illustrates the Transfer Delay on a TDMA bus in a system according to the invention;

Figure 11    illustrates a Worst case protocol frame distribution (3 address and 8 data bits);

Figure 12    illustrates the Dependency of the Transfer Delay on the Number of UARTs (3 Addr. 8 Data bits) according to the invention;

Figure 13    illustrates a Protocol Frame sharing into TDMA time Slots (4 Addr. 8 Data bits) according to the invention;

Figure 14    illustrates a Data frame with 4 address and 8 data bits according to the invention;

Figure 15    illustrates the Timing with 4 address and 8 data bits;

Figure 16    illustrates Worst case protocol frame distribution (4 address and 8 data bits);

Figure 17    illustrates the Dependency of the Transfer Delay on the Number of UARTs(4 Addr. 8 Data bits) according to the invention;

Figure 18    illustrates the Dependency of the Overhead for Frame Length on Data Bytes per Frame;

Figure 19    illustrates a Data frame with 3 address-, 2 length- and 32 data bits according to the invention;

Figure 20    illustrates the Timing with 3 address-, 2 length- and 32 data bits;

Figure 21    illustrates a Worst case protocol frame distribution (3 address-, 2 length-and 32 data bits);

Figure 22    illustrates the Dependency of the Transfer Delay on the Number of UARTs according to the invention;

Figure 23    illustrates the Dependency of the Transfer Delay on the Number of UARTs & Data Bytes according to the invention;

Figure 24    illustrates a System design according to the invention;

Figure 25    illustrates a Top Design UART-TDMA interface according to the invention;

Figure 26    illustrates a Transmit path timing;

Figure 27    illustrates a Data transfer timing cycle TDMA bridge-UART;

Figure 28    illustrates a Data transfer timing cycle TDMA bus;

Figure 29    illustrates a TDMA Bridge Top Design according to the invention;

Figure 30    illustrates a TDMA bridge transmit path timing;

Figure 31    illustrates a TDMA bridge receive path timing;

Figure 32    illustrates the Principle of the Time Slot Controller according to the invention:

Figure 33    illustrates the Principle of the protocol Encoder switch according to the invention;

Figure 34    illustrates the Address generation flow according to the invention;

Figure 35    illustrates the Principle of the protocol encoding rule according to the invention;

Figure 36    illustrates the Principle of the protocol decoder switch according to the invention;

Figure 37    illustrates the Principle of the protocol decoding rule according to the invention;

Figure 38    illustrates the Top Design UART according to the invention;

Figure 39    illustrates the UART transmit path timing;

Figure 40    illustrates the UART receiving path timing;

Figure 41    illustrates the UART RX/TX;

Figure 42    illustrates the TX baud rate timing;

Figure 43    illustrates the RX baud rate timing;

Figure 44    illustrates the TX unit signals;

Figure 45    illustrates the RX unit signals;

Figure 46    illustrates an Example of a serial Data Transmission System according to the invention;

Figure 47    illustrates a Receiver (1X) Sampling, if the RX Clock is Slightly Faster than the TX Clock;

Figure 48    is an illustration of an Error due to Receiver Drift;

Figure 49    illustrates a Typical Sampling pattern of a Receiver;

Figure 50    illustrates the Principle of the TDMA bus multiplexer according to the invention;

Figure 51    illustrates the Timing diagram TDMA master bus controller according to the invention; and

Figure 52    illustrates Time slots needed for the address fill nibble and 14 data protocols.

Detailed Description of Preferred Embodiments

For the GSM-R Dual Mode Cab Radio Station project, FPGAs may be used to realise certain functions. One functionality is to connect several UARTs to a synchronous TDMA bus.

A concept for the integration of more than one asynchronous serial data channel per TDMA channel with a baud rate of 64 kbps must be worked out. It is to guarantee that in the worst case all data are still available and no data are going lost. The circuit should be realised under a minimal expenditure. The concept should be as flexible as possible to allow later modifications for other formats.

It is necessary to define a protocol, to calculate the maximum asynchronous data channels, to analyse the dependencies between baud rate and data format UARTs, to calculate the transfer delay UART RX → TDMA bus →UART TX, to create a design specification for each sub-block needed in this design.

The implementation and test of the concept will be described on the basis of two FPGA evaluation boards. A detailed analysis and design overview over the data connections between several RS232 ports and the TDMA bus will be given. This interface also contains a mechanism that allows to transfer $n$ independent lines over the TDMA bus. The transfer channel has to be absolutely transparent for the end user.

In the Explanation of the used device functionality, Protocol analysis, and Hardware design the following Definitions and Acronyms are used:

bps     Bits per Second
CPU     Central Processing Unit
FCS     Forward Checking Sequence
FIFO     First In First Out
FPGA     Field Programmable Gate Array
GSM-R  Global System for Mobile Railway Communication
kbps     Kilo Bits per Second
RS232  Recommended Standard 232
RX     Receive(r)
TDMA  Time Division Multiple Access
TTY     Teletype
TX     Transmit(ter)
UART  Universal Asynchronous Receiver Transmitter
8N1     Serial data format (1 start-bit, 8 data-bits, no parity-bit, 1 stop-bit)

In the following sections from the basics of serial communication and components, which are known to those skilled in the art, only the most important components for serial communication will be described briefly here. A TDMA-Bus (Time Division Multiple Access Bus) is a time multiplexed serial bus. That means that all input data channels are separated into different time slots and transferred, divided by the time, over one serial line. The TDMA bus for GSM-R is a synchronous serial bus that is separated in 64 time slots (Channels) with 8 Bits. The data rate per Channel is 64 kbps. The invention is applicable inter alia to RS 232 interfaces. RS-232 stands for Recommended Standard number 232. It specifies signal voltages, signal timing, signal function, a protocol for information exchange and mechanical connectors for a serial communication. The serial port on most computers uses a subset of the RS-232 standard. This serial port is a full-duplex device that can send and receive data at the same time. In order to be able to do this, it uses separate lines to transmit and receive data. One component that is used is a Universal Asynchronous Receiver/Transmitter (UART) which accepts data characters from a CPU or another device in parallel format and converts them into a continuous asynchronous serial data stream. It accepts asynchronous serial data streams and converts them into parallel data characters for the CPU or another device. The UART signals the CPU whenever it can accept a new character for transmission or whenever it has received a character for the CPU. The CPU can read out the status of the UART at any time. The status includes data transmission errors and control signals.

As a first step all the several asynchronous data streams must be merged together. All data have to be transferred over the TDMA bus and finally be separated in the receiver. In reference to this the first step will be to convert the asynchronous data streams, received by the UARTs, into a parallel data format by discarding the overhead bits (start bit, stop bit(s), parity bit). For the transmission over the TDMA bus, the parallel data from the different UARTs must be merged together and converted into a synchronous serial data stream. This functionality is realised with a TDMA bridge. At the receiver a second TDMA bridge reads all this data and distributes them back to origin channel. Generally there exist two different concepts to decide from which device the data on the TDMA bus has been received.

In a first approach (Concept One) the data are transferred in a logical order and the receiver knows the correct position of the time slots from the data channels. A distinct packet n always goes to the same device. However, with this concept the slot is always used even when the UART from a data channel transmits no data. Resulting of this the bandwidth of the TDMA bus is divided by the number of registered data channels also when only one UART is used.

In a second approach (Concept Two) a protocol is created that adds additional data to decide from which channel the data has been transmitted. By receiving this data the receiver knows that the data were sent by the UART n and can be served to the device n. The advantage of this concept is, that the bandwidth on the TDMA bus is only divided by the used UARTs. However, additional bandwidth for the protocol overhead is necessary.

It is desirable to utilize UARTs with a baud rate faster than 9600 bps. Considering the fact that the bandwidth in concept one does not allow to increase the bit rate of the UARTs, when not the maximum number of UARTs are connected to the TDMA bridge, then concept two is the better solution and used for the further work.

With concept two the following steps are necessary: Creation of a formula to calculate the maximum number of UARTs. This information should be considered in all protocol analysis steps; Analysing the information needed in the protocol used for this project; Creating different protocols for the data flow control on the TDMA bus; Comparing the different advantages and disadvantages of the protocol and decide which protocol has to be implemented; Creating the top down design with the interface and timing descriptions; Calculating the delay time for the data transfer (UART→TDMA bus→UART).

The maximum number of UARTs, which can be connected to the TDMA bus, depends mainly on the UART bit rate and the protocol overhead from the protocol data frames. The bit rate over the TDMA bus is 64 kbps per channel. One requirement for this design is that only one TDMA slot for transmitting and one slot for receiving data are used. Before starting with the protocol analysis, it is necessary to create formulas to calculate the maximum number of devices.

The data rate of the UART (parallel side) is not equal to the bit rate on the serial port as given in datasheets because the serial line includes the overhead with the controlling data (start-bit, stop-bit, parity bit). The Data Rate UART is given by:

$$DataRate_{UART} = \frac{BitRate_{UART} \cdot Databits_{UART}}{Startbit_{UART} + Stopbit(s)_{UART} + Paritybit_{UART} + Databits_{UART}} \tag{1}$$

wherein

$DataRate_{UART}$ :       Data rate on the parallel port of the UART [bps]
$BitRate_{UART}$:       Data rate on the serial port of the UART [bps] (300,600,1200...bps)
$Startbit_{UART}$:       Number of start-bit(s) (usually 1)
$Databits_{UART}$:       Number of data-bits (usually 8,7,6 or 5) configurable in the UART)
$Stopbit(s)_{UART}$:       Number of stop-bit(s) (usually 1 or 2 configurable in the UART)
$Paritybit_{UART}$:       Number of parity-bit (usually 0 or 1 configurable in the UART)

The Data Rate Parallel Port UARTs vs. Data Format and Bit Rate is given in Table 1 below.

| Data Format on the Serial lines | | | | |
|---|---|---|---|---|
| Bit-rate | 8 Data Bits 1 Start Bit 1 Stop Bit 0 Parity Bit | 8 Data Bits 1 Start Bit 2 Stop Bit 0 Parity Bit | 8 Data Bits 1 Start Bit 1 Stop Bit 1 Parity Bit | 8 Data Bits 1 Start Bit 2 Stop Bit 1 Parity Bit |
| 300 | 240 | 218 | 218 | 200 |
| 600 | 480 | 436 | 436 | 400 |
| 1200 | 960 | 873 | 873 | 800 |
| 2400 | 1920 | 1745 | 1745 | 1600 |
| 4800 | 3840 | 3491 | 3491 | 3200 |
| 9600 | 7680 | 6982 | 6982 | 6400 |
| 19200 | 15360 | 13964 | 13964 | 12800 |
| 38400 | 30720 | 27927 | 27927 | 25600 |
| 57600 | 46080 | 41891 | 41891 | 38400 |

Table 1

The maximum number of UARTs that can be connected to the TDMA bus can be calculated as follows:

$$Max.UARTS = \frac{BitRate_{TDMA}}{DataRate_{UART} \cdot \left( \dfrac{Databits_{UART} + POverhead_{TDMA}}{Databits_{UART}} \right)} \qquad (2)$$

wherein

Max. UARTS:     Number of UARTs (all configured to an equal data rate)
$BitRate_{TDMA}$ :     Bit rate of one time slot on the TDMA bus [bps]
$DataRate_{UART}$ :     Data rate of the UART parallel out [bps]
$Databits_{UART}$:     Number of data-bits (usually 8,7,6 or 5) configurable in the UART)
$POverhead_{TDMA}$:     Number of additional bits for the protocol over the TDMA bus calculated in how many bits it gets per one data byte [bits].

Table 2 shows the Max Number of UARTs vs. the bit rate.

| Number of UARTs (Data format 8N1) | | | | | |
|---|---|---|---|---|---|
| Bit-Rate$_{UART}$ [bps] | P-Overhead 0 Bit | P-Overhead 1Bit | P-Overhead 2 Bit | P-Overhead 3 Bit | P-Overhead 4 Bit |
| 300 | 266 | 237 | 213 | 193 | 177 |
| 600 | 133 | 118 | 106 | 96 | 88 |
| 1200 | 66 | 59 | 53 | 48 | 44 |
| 2400 | 33 | 29 | 26 | 24 | 22 |
| 4800 | 16 | 14 | 13 | 12 | 11 |
| 9600 | 8 | 7 | 6 | 6 | 5 |
| 19200 | 4 | 3 | 3 | 3 | 2 |
| 38400 | 2 | 1 | 1 | 1 | 1 |
| 57600 | 1 | 1 | 1 | 1 | 0 |

Table 2

This relation is also shown in a diagram in Fig. 5.

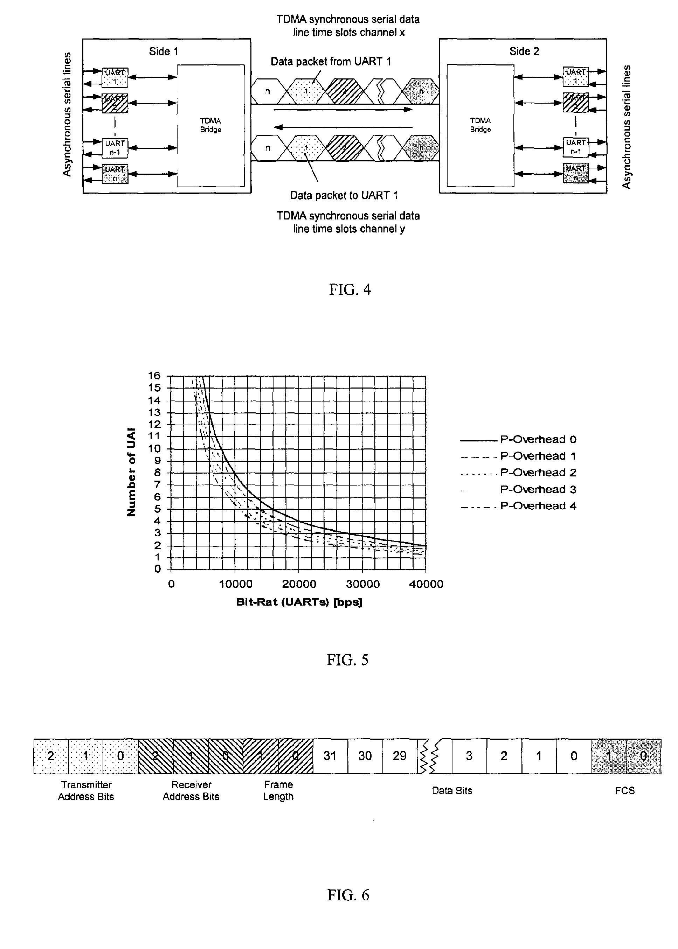

A protocol has to be set up for the further procedure. The following information may be part of the protocol package: Receiver Address, Transmitter Address, Frame Size, Priority, Data Format, Security, Error Correction (FCS). Fig. 6 shows an example of a protocol data frame:

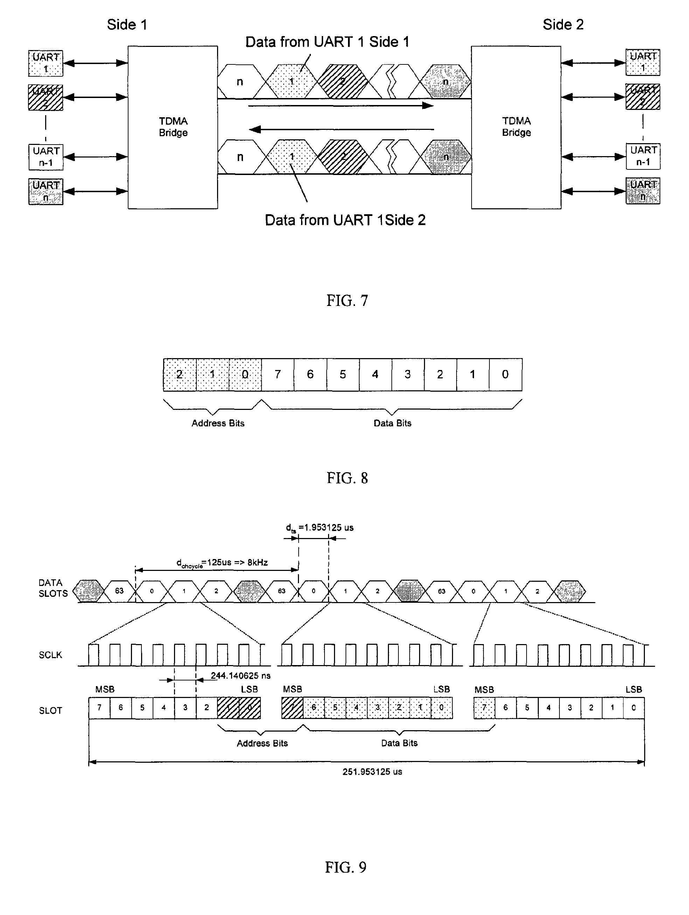

The following analysis defines all the relevant information in the protocol used for the GSM-R project. The items in the list above are not all suitable for a physical layer protocol but it illustrates the component of a protocol in generally. The protocol supports the data transfer between the two TDMA bridges. Fig. 7 shows the principle of this system. The Protocol Items will be analysed: All the following data can be important for a protocol and have to be checked whether it is necessary to implement it or not.

Receiver Address: It is not required to have different receivers in this project. All data package are transmitted over one time-slot to a fix receiver (TDMA bridge) decoded by hardware. For propagating the data to the UARTs the receiving TDMA bridge uses the transmitter address (receiver address = transmitter address).

Transmitter Address: The transmitter address defines the sender UART of a data package. The receiver uses this address to pass the package to the correct destination.

Frame Size: This information is needed if more than one byte is combined to a data frame. This information is not needed if all frames have the same size.

Priority: For a radio system it is very important, that information can be transmitted with a minimal delay time. The critical part is the transmission path, but the protocol used for GSM-R sends all data packages in a logical correct order to one receiver (point-point connection). The transmitter (TDMA bridge) is fast enough to serve all incoming data from the UARTs forward to the TDMA bus. The time for transmitting data can only be affected by changing the order of packages. The protocol has no impact on the packages order. This can only be performed in the TDMA bridge. If a priority is needed, the mechanism must be implemented in the transmitter of the TDMA bridge.

Data Format: It is possible that UARTs work with less than 8 data bits. The user is responsible that both UARTs (Side 1 and Side 2 see Fig. 7) are configured correctly. Data types with less than 8 data bits received from the UART, are sent with fill bits as one byte over the TDMA-Bus. The fill bits are discarded from the UART that receives the data.

Security: The security is not an issue of the physical layer (OSI Layer 1). This bus works in a locked system which does not need any security mechanisms.

Error Correction: The implementation of a FCS (forward checking sequence) shall be checked now. An error checking that only recognise an error of the received data is not useful for this protocol. It does not help to recognise corrupt data because the system is not able to correct them. In this case a mechanism must be implemented to request a retransmission of the invalid data package. This requires a huge hardware effort. It also affects the average data transfer rate on the TDMA bus. The second solution is to create an optimal code that allows to correct bit faults. A code that recognises and repairs corrupt data with more than one bit fault contains a to big redundancy and the maximum number of UARTs will be reduced. In addition a huge hardware effort is needed to implement a redundant code. Error correction will be an issue of a higher OSI layer and will be implemented into the software. It has the advantage that the error correction works over the whole transmission path (PC-UART-TDMA bus-UART-PC).

If no data are sent over the TDMA bus the protocol frames are sent over the TDMA bus. When no data are transmitted, the receiver needs a criteria to decide either the transferred data is valid or nothing is transferred. When no data is transferred the data line from the TDMA bus is set to a high level. In this case the receiver has no chance to decide if this is a data byte "1111 1111" or a no data transfer. It will be a further issue of the protocol to handle this information. A special transmitter address in the protocol frame is used to signalise when the time slot transports no data. The zero transmitter address will be used for signalising this. The zero address is sent out without any data bytes, in this case the protocol frame length is reduced to the length of the transmitter address.

There are several protocol options conceivable, three of which will be discussed in the following.

Protocol Option One: In this analysis only the key data that are not rejected shall be analysed.

Transmitter Address: A simple protocol may be used that is optimised by the transmission time. One data frame only consists of the transmitter address and one data byte. The calculation of the address length depends on how many UARTs with a bit rate of 9600 bps are connected to the TDMA bridge. Without a protocol overhead it is possible to connect a maximum of 8 UARTs to the bridge (see Table 2). So we need at least a 3-bit address for addressing each UART. An additional address is needed to signalise that no data is transferred over the TDMA bus. When we consider that we have a protocol overhead of three address bits then the 8 addresses will be enough.

Frame Size: In this protocol each data byte will be sent out with the address of the transmitter and no additional information for the frame length is necessary.

Protocol Frame: With the above information the frame is now defined, see Fig. 8 illustrating a Data frame with 3 address and 8 data bits.

Protocol Timing Analysis: To make any statements about the timing it is necessary to analyse the timing of the transmission path. In this protocol we have three bits overhead for the transmitter address. Fig. 9 shows that 3 TDMA time slots are used to transmit one data frame in the worst case, i.e. Timing with 3 address and 8 data bits. The maximum time, which a data byte will be delayed from sending out by the transmitter until the last data bit is received by the receiver without any priority, depends on the maximum number of UARTs. It is assumed that all UART send with the maximal data rate, that UART x just sends a byte and has to wait until all other UARTs have transmitted their data, that the sending sequence of the UARTs is UART 1, UART 2 ... UARTn.

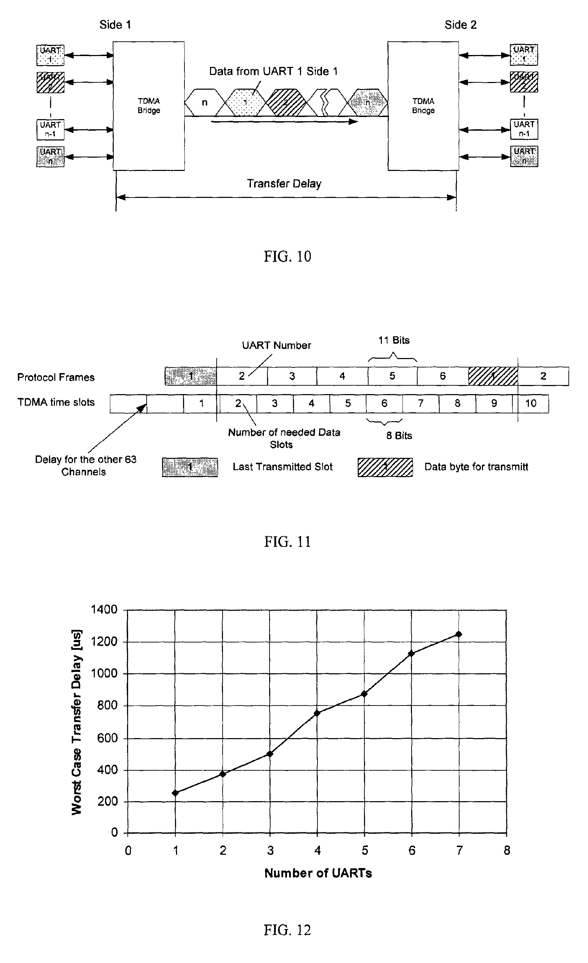

Table 2 shows that maximal 6 UARTs with a protocol overhead of 3 bits and a baud rate of 9600 bps can be connected to the TDMA bus. With this information it is possible to calculate the maximum transfer delay (see Fig. 10) assuming that a time slot must be read or written completely before the receiver evaluates the data. In the worst case the considered UART has just finished sending data and so we have to wait 9 TDMA frames plus 1 time slot. This calculation neglects the propagation delay to the output pins of the TDMA bridge. Fig. 11 illustrates the Transfer Delay TDMA bus. In Fig. 11 the Worst case protocol frame distribution (3 address and 8 data bits) is illustrated.

The number of Bits per protocol frame is given by

$$PDataFrame = POverhead + DataBits = 3 + 8 = 11 \tag{3}$$

The TDMA time slots used for n UARTs transferring one byte is given by

$$n_{ts} = \frac{Max.UARTs \cdot PDataFrame}{TDMADataStotBits} = \frac{6 \cdot 11}{8} = 8.25 \tag{4}$$

wherein

| | |
|---|---|
| $PDataFrame$ : | Number of bits per protocol data frame |
| $DataBits$: | Number of data-bits per frame |
| $POverhead$: | Number of additional bits for the protocol [bits] |
| $n_{ts}$: | Number of time slots needed |
| $Max.\ UARTs$: | Number of UART devices with the same data rates, which can be connected to the TDMA bus |
| $TDMADataSlotBits$: | Number of bits transmitted in one slot |

The maximal number of time slots used to transfer 8.25 data frames is 9. Considering that one bit needs 0.125 (1/8) time slot, the 0.25 time slot from the 8.25 can also be propagated over two extra time slots. So the maximal number of time slots $n_{tsmax}$= 10.

The Maximum transfer delay is given by

$$t_d \approx (n_{ts\max} - 1) \cdot t_{chcycle} + t_{ts} \qquad\qquad (5)$$

resulting to

$$t_d = (10 - 1) \cdot 125us + 1.953125us = \underline{1126.953\ us}$$

wherein

$t_d$:          Maximum delay time for sending out data to the TDMA bus until the other TDMA bridge receives the data.
$n_{tsmax}$:       Maximum number of time slots needed
$t_{chcycle}$:     Time needed between two frames with the same slot number
$t_{ts}$:         Time needed for transmitting one slot

The Dependencies Number of UARTs and Transfer Delay is listed in the following Table 3 and Fig. 12.

Table 3

| Bitrate UART | Number of UARTs | Maximal Transfer Delay [us] |
|:---:|:---:|:---:|
| 9600 | 1 | 252 |
| 9600 | 2 | 377 |
| 9600 | 3 | 502 |
| 9600 | 4 | 752 |
| 9600 | 5 | 877 |
| 9600 | 6 | 1127 |
| 4800 | 7 | 1252 |

Table 3 lists the transfer delay with different numbers of UARTs (3 Addr. 8 Data bits). In Fig. 12 the Dependency of the Transfer Delay on the Number of UARTs (3 Addr. 8 Data bits) is illustrated.

Protocol Option Two: This protocol is based on the protocol option one.

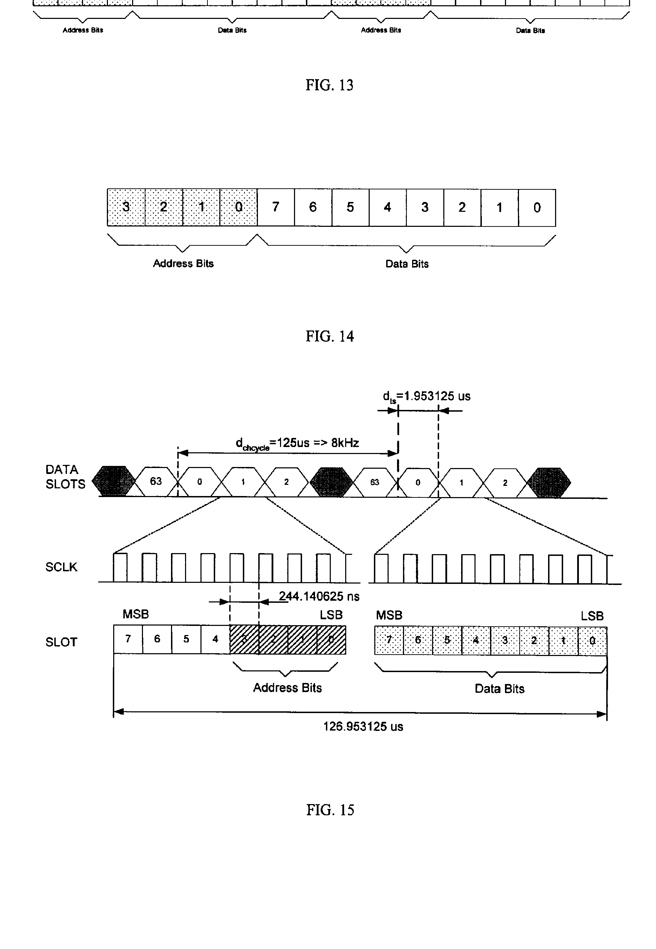

Transmitter Address: Protocol option one shows that one protocol data frame may be shared over three TDMA time slots. The reason for that is that three address bits cause the next protocol data frame from another UART starting at any position in the TDMA time slot. By adding a transmitter address of four bits, the protocol frame starts only at two defined positions in a TDMA time slot and it has the advantage that 15 different UARTs are addressable. The transfer delay will be not faster when the maximal number of UARTs are connected to the TDMA bus because more bits must be transferred but the handling of the protocol becomes easier. Addressing more than 8 UARTs can be of interest if lower data rates are used for the UARTs. Fig. 13 shows a Protocol Frame sharing into TDMA time Slots (4 Addr. 8 Data bits).

Frame Size: Like protocol option one this protocol only contains the address and the data bits.

Protocol Frame: With the above information from the first and second protocol option the frame is now defined as illustrated in Fig. 14 showing a Data frame with 4 address and 8 data bits.

Protocol Timing Analysis: To make a statement about the timing it is necessary to analyse the timing of the transmission path. In this protocol we have four bits overhead for the transmitter address. Fig. 15 shows that in the worst case only two TDMA data slots are used for transmitting one protocol data frame. Fig. 15 shows the Timing with 4 address and 8 data bits. The maximum time, which a data byte will be delayed from sending out by the transmitter until the last data is received in the receiver without any priority, depends on the maximum number of UARTs. For the following it is assumed that all UARTs send with the maximal data rate, that UART x just sends a byte and has to wait until all other UARTs have transmitted their data, that the sending sequence of the UARTs is UART 1, UART 2 ... UARTn. Table 2 shows that maximal 5 UARTs with a protocol overhead of 4 bit and a baud rate of 9600 bps can be connected to the TDMA bus.

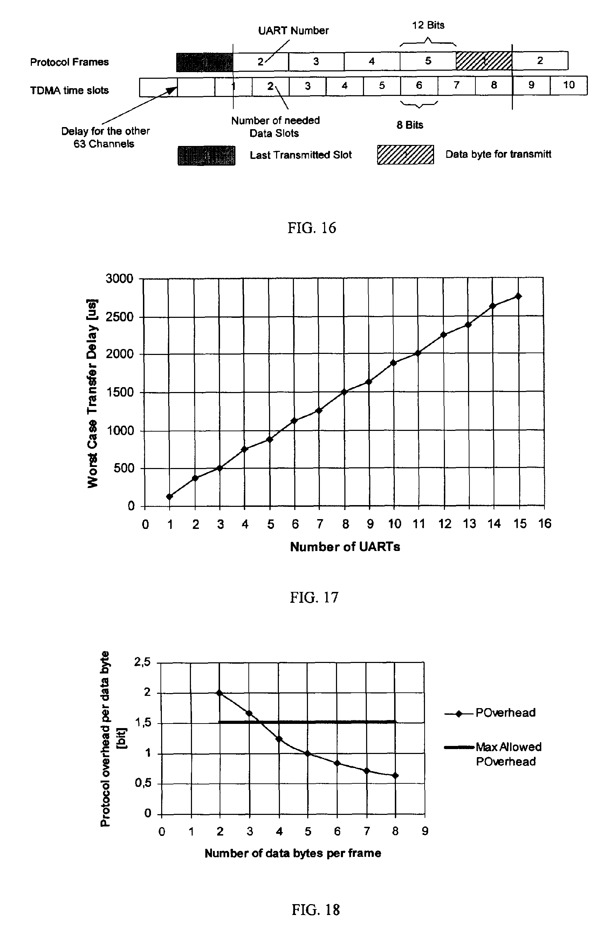

With this information it is possible to calculate the maximum transfer delay (see Fig. 10) assuming that a time slot must be read or written completely before the receiver evaluates the data. In the worst case this UART has just finished sending data and so we have to wait 7 TDMA frames plus 1 time slot. This calculation neglects the propagation delay to the output pins output pins of the TDMA bridge. Fig. 16 shows the Worst case protocol frame distribution (4 address and 8 data bits)

With (3), (4) and (5) the transfer delay for this protocol can be calculated. The number of bits per protocol frame is

$$PDataFrame = 4 + 8 = 12,$$

and the number of Time slots used for n UARTs transferring one byte is

$$n_{ts} = \frac{5 \cdot 12}{8} = 7.5$$

The maximal numbers of time slots used to transfer 7.5 data frames are 8. Considering that one bit needs 0.125 (1/8) time slot, but the frame can only start at two positions in the time slot. The maximal number of time slots $n_{tsmax} = 8$ results in a maximal transfer delay of

$$t_d = (8-1) \cdot 125 us + 1.953125 us = \underline{876.953 us}$$

Dependencies Number of UARTs and Transfer Delay: In the table 4 and Fig. 17 the dependency between the number of UARTs and the maximum Transfer Delay is listed.

Table 4

| Bitrate UART | Number of UARTs | Maximal Transfer Delay [us] |
|---|---|---|
| 9600 | 1 | 127 |
| 9600 | 2 | 377 |
| 9600 | 3 | 502 |
| 9600 | 4 | 752 |
| 9600 | 5 | 877 |
| 4800 | 6 | 1127 |
| 4800 | 7 | 1252 |
| 4800 | 8 | 1502 |
| 4800 | 9 | 1627 |
| 4800 | 10 | 1877 |
| 2400 | 11 | 2002 |
| 2400 | 12 | 2252 |
| 2400 | 13 | 2377 |
| 2400 | 14 | 2627 |
| 2400 | 15 | 2752 |

The transfer delay with different number of UARTs (4 Addr. 8 Data bits) is listed in table 4, the Dependencies Transfer Delay vs. Number of UARTs(4 Addr. 8 Data bits) is illustrated in Fig. 17.

Protocol Option Three

The purpose of this protocol is to increase the channel efficiency by increasing the maximal number of UARTs compared to option one and two. Reducing the average of the protocol overhead per data byte will have this effect. In this analysis only the key data which are not rejected in the analysis of the protocol items shall be analysed.

Address from transmitter: It is impossible to serve more than 8 UARTs with 9600 bps (see table 2) over the TDMA bus. It makes no sense to create a protocol with 8 UARTs because the hardware effort for buffering the data until they can be served is to huge and the maximal transfer delay becomes to long. So three address bits will be enough for serving 7 UARTs because we need one address for signalling that no data is transferred over the TDMA bus.

Frame Size: This protocol transmits more than one data byte per protocol data frame. It must be possible to transfer less than the maximum of bytes with one frame because it can be that only one byte is transferred. So the data length of the frame must be added to the protocol header.

Calculation of minimal protocol overhead for 7 UARTs:

The data rate of a UART receiving data 8N1 with 9600 bps on the parallel side is 7680 bps (see 0). The Maximal protocol overhead is given by:

$$POverhead_{TDMA\_MAX} = \frac{BitRate_{TDMA}}{\frac{DataRate_{UART}}{DataBits_{UART}} \cdot Max.UARTS} - DataBits_{UART},$$

$$POverhead_{TDMA\_MAX} = \frac{64000}{\frac{7680}{8} \cdot 7} - 8 = 1.524\,bit$$

wherein

| | |
|---|---|
| *Max. UARTS*: | Number of UARTs (all configured to an equal data rate) |
| $BitRate_{TDMA}$ : | Bit rate of one time slot on the TDMA bus [bps] |
| $DataRate_{UART}$ : | Data rate of the UART parallel out [bps] |
| $DataBits_{UART}$: | Number of data-bits (usually 8,7,6 or 5) configurable in the UART) |
| $POverhead_{TDMA\_MAX}$: | Number of maximal additional bits for the protocol over the TDMA bus calculated in how many bits it gets per one data byte [bits]. |

The Number of bits used for the protocol frame length is given by:

$$FrameLength = ld(ndb) \tag{7}$$

The Protocol overhead per data byte transferred in one protocol frame is given by

$$POverhead_{TDMA} = \frac{NumOfAdress + FrameLenght}{ndb} \tag{8}$$

wherein

| | |
|---|---|
| *FrameLength*: | Number of bits used for setting the frame length in the protocol frame (excluding the address) |
| *ld* | Logarithm dualis. |
| *ndb:* | Number of data bytes transferred in one protocol data frame. |
| $P_{Overhead\ TDMA}$: | Maximal number of additional bits for the protocol over the TDMA bus calculated in how many bits it gets per 8 data bits that the maximal number of UARTs can be connected to the TDMA bus [bits]. |
| *NumOfAddress*: | Number of address bits |

The Numeric solution (Numeric calculation of the frame length) is shown in Table 5 and in Fig. 18:

Table 5

| NumOfAddress | ndb | FrameLength [bit] | FrameLength$_{real}$ [bit] | POverhead$_{TDMA}$ [bit] |
|---|---|---|---|---|
| 3 | 2 | 1 | 1 | 2 |
| 3 | 3 | 1.58 | 2 | 1.666 |
| 3 | 4 | 2 | 2 | 1.25 |
| 3 | 5 | 2.32 | 3 | 1 |
| 3 | 6 | 3 | 3 | 0.833 |
| 3 | 7 | 2.81 | 3 | 0.714 |
| 3 | 8 | 3 | 3 | 0.625 |

In Fig. 18 the Dependencies Overhead for Frame Length vs. Data Bytes per Frame are shown. Fig. 18 and Table 5 show that for 4 data bytes a frame length of two bits must be added to this protocol.

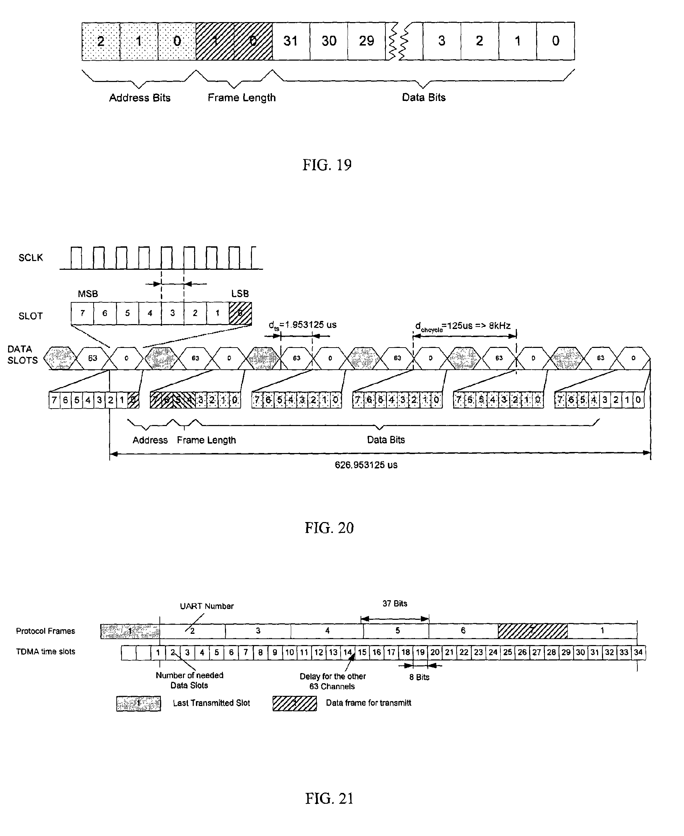

Protocol Frame: With the calculations and information from above the protocol frame is defined as illustrated in Fig. 19. Fig. 19 shows a Data frame with 3 address-, 2 length- and 32 data bits.

Protocol Timing Analysis: To make a statement about the timing it will be necessary to analyse the timing of the transmission path. In this protocol we have now 1.25 bits overhead per data byte. According to Fig. 20 under worst case condition 6 TDMA data slots were used for transmitting one data frame. Fig. 20 illustrates the Timing with 3 address-, 2 length- and 32 data bits. The maximum time, which a data byte will be delayed from sending out by the transmitter until the last data is received by the receiver without any priority, depends on the maximum number of UARTs. It is assumed that all UARTs send with the maximal data rate, UART x just sends a byte and has to wait until all other UARTs have transmitted their data, the sending sequence of the UARTs is UART 1, UART 2 ... UARTn.

Table 2 shows that maximal 7 UARTs with a protocol overhead of 4 bits and a baud rate of 9600 bps can be connected to the TDMA bus. With this information it is possible to calculate the maximum transfer delay (see Fig. 10) assuming that a time slot must be read or written completely before the receiver evaluates the data. In the worst case this UART has just finished sending data and so we have to wait for 7 TDMA frames plus 1 time slot. This calculation neglects the propagation delay to the output pins of the TDMA bridge. Fig. 21 illustrates the Worst case protocol frame distribution (3 address-, 2 length- and 32 data bits).

With (3), (4), (5) the transfer delay for this protocol can be calculated. The number of Bits per protocol frame is given by

$$P_{DataFrame} = 5 + 4 \cdot 8 = 37$$

The number of time slots used for 7 UARTs transferring four bytes is:

$$n_{ts} = \frac{7 \cdot 37}{8} = 32.375$$

The numbers of time slots used to transfer the data are 32.375. Considering that one bit needs 0.125 (1/8) time slot, the 0.375 time slot from the 32.375 can also be propagated over two extra time slots. So the maximal number of time slots $n_{tsmax}$ is 34.
The Maximal transfer delay is:

$$t_d = (34-1) \cdot 125 us + 1.953125 us = \underline{4126.953\ us}$$

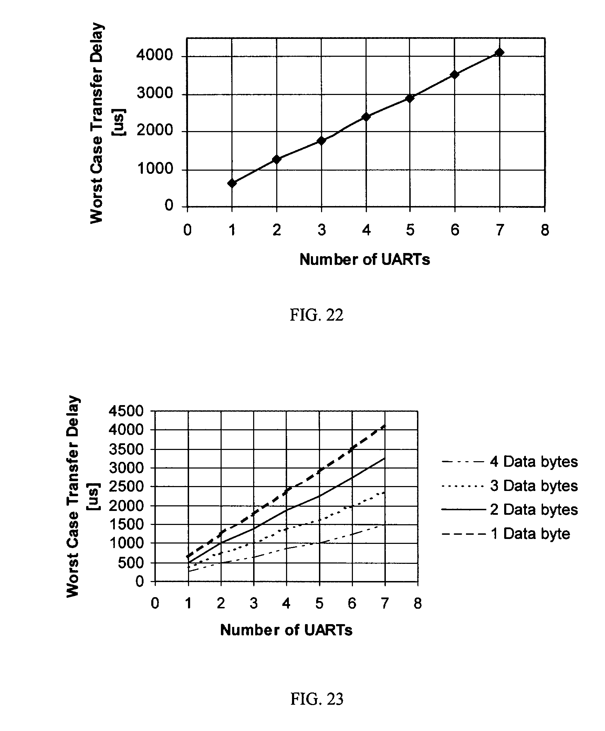

Dependencies Number of UARTs and Transfer Delay: In the following Table 6 and Fig. 22 the dependency between the number of UARTs and the maximum transfer delay for a maximal number of data bits per protocol frame is listed.

Table 6

| Bitrate UART | Number of UARTs | Maximal Transfer Delay [us] |
|---|---|---|
| 9600 | 1 | 627 |
| 9600 | 2 | 1252 |
| 9600 | 3 | 1752 |
| 9600 | 4 | 2377 |
| 9600 | 5 | 2877 |
| 9600 | 6 | 3502 |
| 9600 | 7 | 4127 |

Table 6 lists the Calculation Transfer Delay with different Number of UARTs whereas Fig. 22 shows the Dependencies Transfer Delay vs. Number of UARTs

Dependencies Number of Bytes per Frame and the Transfer Delay: Table 7 and Fig. 23 show the dependencies between the number of UARTs, data bytes per data frame and the maximum transfer delay.

Table 7

| Delay with different numbers of Bytes in the Protocol Data Frame | | | | | |
|---|---|---|---|---|---|
| Bitrate UART | Number of UARTs | 1 Byte Transfer Delay [us] | 2 Byte Transfer Delay [us] | 3 Byte Transfer Delay [us] | 4 Byte Transfer Delay [us] |
| 9600 | 1 | 252 | 377 | 502 | 627 |
| 9600 | 2 | 502 | 752 | 1002 | 1252 |
| 9600 | 3 | 627 | 1002 | 1377 | 1752 |
| 9600 | 4 | 877 | 1377 | 1877 | 2377 |
| 9600 | 5 | 1002 | 1627 | 2252 | 2877 |
| 9600 | 6 | 1252 | 2002 | 2752 | 3502 |
| 9600 | 7 | 1502 | 2377 | 3252 | 4127 |

Table 7 lists the Calculation transfer delay with different Number of UARTs whereas Fig. 23 shows the Dependencies Transfer Delay vs. Number of UARTs & Data Bytes.

Protocol Analysing Summary: The summary compares all the important data of the protocol options. Hardware and implementation estimation effort: In this section the key points of the hardware estimation between the different protocols shall be made.

Protocol Option One (3 address- and 8 data bits) offers the advantages that each data byte from the UART is transported with its own header data. In this case less buffers are necessary for collecting and storing the data, that no decision logic is needed whether the bytes should be sent or it should wait until the data frame is filled, that no logic for the calculation of the frame length is needed. However, a special logic is necessary because the address bits will stay every time in another position in the TDMA time slot, there is a Limitation to 7 UARTs even with lower data rates.

Protocol Option Two (4 address- and 8 data bits) offers the advantages that each data byte from the UART is transported with its own header data. In this case less buffers are needed for collecting and storing the data, that no decision logic is needed whether the bytes should be sent or it should wait until the data frame is filled, that no logic for the calculation of the frame length is needed, that the logic for read out the addresses of a TDMA data frame can work with nibbles → Only two position in a TDMA frame, where the addresses can stay, exists. However, there is a Limitation to 5 UARTs at 9600 bps

Protocol Option Three (3 address-, 2 frame length- and 32 data bits) offers the advantages of a maximum of 7 UARTs at 9600 bps. However, a maximum of four data bytes is transported with its own header data, for collecting data and waiting until it can be sent, large buffers are needed for collecting and storing the data, a decision logic is needed for deciding whether the bytes shall be sent or wait until the data frame is filled, a logic for calculation of the frame length is needed, a special logic must be made because the address bits will stay every time in another position in the TDMA time slot, there is a limitation to 7 UARTs even with lower data rates.

As a Summary the following table is given:

| Protocol | Number of UARTs (9600 bps) | Max. delay for one byte & 5 UARTs (us) | Hardware effort estimation | Implementation effort estimation | Max. addressable devices |
|---|---|---|---|---|---|
| Option one | 6 | 877 | Medium | Medium | 7 |
| Option two | 5 | 877 | Small | Small | 15 |
| Option three | 7 | 2877 | Large | Huge | 7 |

With the above pros and cons one Protocol is selected on which the further description will be based. After checking the data between the three protocol options the best choice for further work is the protocol option two because it needs less hardware effort and most devices can be addressed. In contrast to the maximum addressable devices, it is not important for the project to connect more than 5 UARTs at 9600 bps to this TDMA bus. The transfer delay should be as short as possible and the protocol option two guarantee this too.

The hardware design is realised in a top down design. Important for this design is, that no tri-state signals are used internally in the FPGA. With tri-state signals in the design it can get a lot of problems when the lines in the FPGA are not correctly driven.

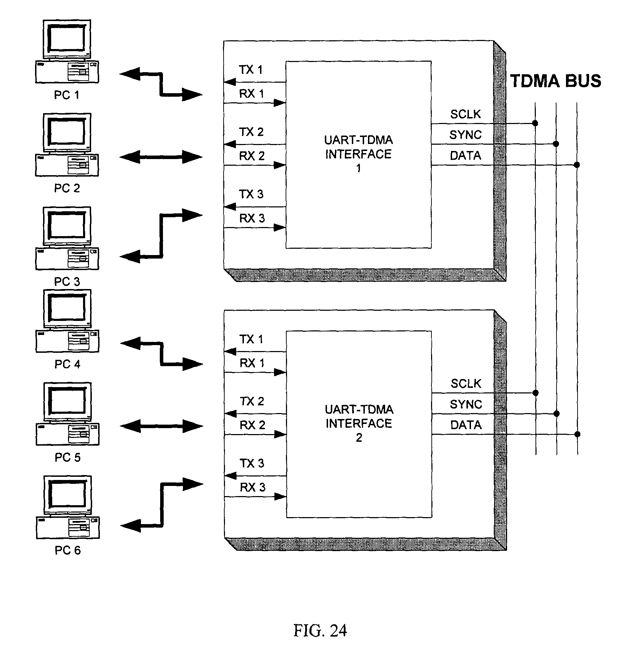

System Design: The design displayed in Fig. 24 represents a test circuit for the UART-TDMA interface. In this case two UART-TDMA interfaces are connected together. An absolutely transparent transmission can be performed between a PC, connected to UART-TDMA interface 1 and a PC connected to the UART-TDMA interface 2. PC 1 is connected to PC 4, PC 2 is connected to PC 5 and PC 3 is connected to PC 6. All PCs transfer their data over the same time slots on the TDMA bus to the corresponding PC on the other interface without loosing any data.

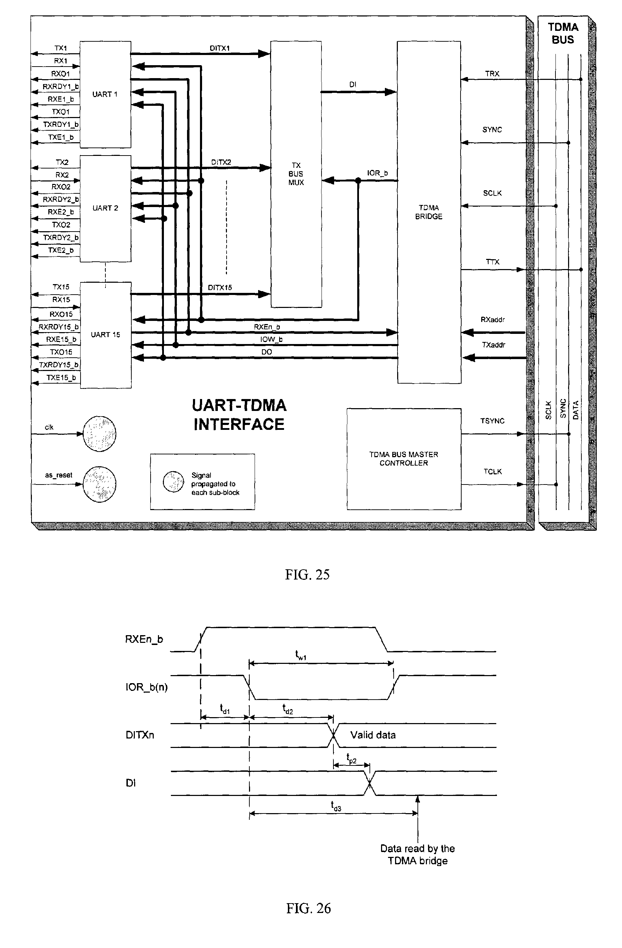

In Fig. 25 the Top Design UART-TDMA Interface according to the invention is shown. The DART-TDMA interface connects a maximum of 15 UARTs to the TDMA bus and transfers their data over one time slot per transmit direction to another TDMA device. In this semester work a stand-alone implementation is realised. The TDMA bus controller is implemented only into one of both UART-TDMA interfaces otherwise one of them works as jamming station. The details of the Top Design UART-TDMA interface in Fig. 25 will be explained in the following.

Data Transmitting path (UART→ TDMA): A character transferred from a RS 232 device is received by the RXn line in the UART n. The UART n signalises the TDMA bridge, that a data character has been received by the RXEn_b line. For sending data, the TDMA bridge switches the correct DITXn data bus using the transmit bus multiplexer to its DI data input bus and starts a data request with a IOR_b(n) line by the UART n. The UART n puts the received data character to the DITXn data bus and it can be read by the TDMA bridge. When the data is read, the TDMA bridge adds the UART address to the protocol frame and transmits it to the TDMA bus into the time slot specified by the TXaddr signals.

Data Receiving path (TDMA → UART): The TDMA bridge scans one channel (time slot) configured by the RXaddr bus on the TDMA bus. Have data been received, the bridge removes the protocol overhead of the received data, puts the data to the DO bus and writes it using the IOW_b(n) line to the UART specified by the address received in the protocol frame. The UART sends the data character as an asynchronous data stream to a RS 232 device.

In both cases the involved sub-blocks for transmitting data from the UART to the TDMA bus and for receiving data are described in detail in the following, namely UART, TX bus multiplexer, TDMA bridge, TDMA bus master controller.

Synchronisation of external Signals: The whole design shall run with the same clock signal. In this case the clk frequency of the FPGA evaluation board (25.175 MHz) is used. The external serial input lines RXn/TRX are only used as enable and not as clock signals in the UART and the TDMA bridge. All signals are read by the rising edge of the clk cycle. A high clock frequency has the advantage that the baud rate signals of the UART can be generated in a acceptable range. Further other devices than UARTs which need higher clock frequencies must not be synchronised especially. The disadvantage is that the FPGA needs more power.

Interface Description: Table 8 lists the most signals of the UART-TDMA interface top level design displayed in Fig. 25.

| Signal Name | I/O | Description |
|---|---|---|
| clk | I | Master clock input (Test board clk = 25.175 MHz) |
| as_reset | I | Asynchronous master reset. |
| TXn | O | Serial asynchronous output. The LSB of the character is transmitted first. |
| RXn | I | Serial asynchronous input. The LSB of the character is received first. |
| IOR_b(n) | - | Read strobe. A low level on IOR_b(n) transfers the first contents of the FIFO to the DITXn bus. |
| IOW_b(n) | - | Write strobe. A low value on the IOW_b(n) adds the character from the DO bus into the UART's RX FIFO. |
| TXEn_b | O | TX FIFO empty output. Goes low when the transmit FIFO of the UART is empty. |
| TXRDYn_b | O | TX FIFO full output. Goes low when a the transmit FIFO of the UART is full |
| TXOn | O | TX FIFO overflow output. Goes high when an overflow in the transmit FIFO occurs. It is hold high until one entry in the FIFO is cleared. |
| RXEn_b | O | RX FIFO empty output. Goes low when the receiver FIFO is empty. Can be used as interrupt output to another device. |
| RXRDYn_b | O | RX FIFO full output. Goes low when the receiver FIFO is full. |
| RXOn | O | RX FIFO overflow output. Goes high when an overflow in the RX FIFO occurs. Is hold until one entry in the FIFO is cleared. |
| TRX | I | Serial synchronous input (TDMA bus). The TDMA bus data line is divided into a receiver and transmitter line because no tri-state signals shall be used internally in the FPGA. The TRX and TTX lines are connected externally. |
| TTX | O | Serial synchronous output (TDMA bus). The TDMA bus data line is divided into a receiver and transmitter line because no tri-state signals shall be used internally in the FPGA. The TRX and TTX lines are connected externally. |
| SCLK | I | TDMA bus synchronisation clock input. All activities over the TDMA bus are synchronised with this clock. |
| SYNC | I | TDMA bus time slot synchronisation input. This signal marks the first of the 64 data channels. |
| Rxaddr | I | Receive slot address input. Six data lines propagate the time slot (channel) number for reading data on the TDMA bus. |
| Txaddr | I | Transmit slot address input. Six data lines propagate the time slot (channel) number for transmitting data on the |

| | | TDMA bus. |
|---|---|---|

| DI | - | Internal data bus. Eight data lines propagate the data from the transmit bus multiplexer into the TDMA bridge. |
|---|---|---|
| DO | - | Internal data bus. Eight data lines propagate the data from the TDMA bridge into the UARTs. |
| TSYNC | O | TDMA bus time slot synchronisation output. This signal marks the first of the 64 data channels. |
| TCLK | O | TDMA bus synchronisation clock output. All activities over the TDMA bus are synchronised with this clock. |
| DITXn | - | Internal data bus. Eight data lines propagate the data from the UART to the transmit bus multiplexer. |

Table 8

Table 8 lists the Signal Description UARTs to TDMA connection.

Internal Timing: Transmit UART→TDMA bridge cycle timing requirements over recommended ranges of clock cycles. The Transmit path timing is shown in Fig. 26.

Table 9

| Signal | Description | MIN | MAX | Unit |
|---|---|---|---|---|
| $t_{w1}$ | Pulse duration IOR_b(n) low | >1 | | clk cycle |
| $t_{d1}$ | Delay time RXEn_b ↑ to IOR_b(n) ↓ | 1 | | clk cycle |
| $t_{d2}$ | Delay time IOR_b(n) ↓ to DITXn valid | | 1 | clk cycle |
| $t_{d3}$ | Delay time IOR_b(n) ↓ to DI valid | 1 | 2 | clk cycle |
| $t_{p2}$ | Propagation delay bus multiplexer | | <<1 | clk cycle |

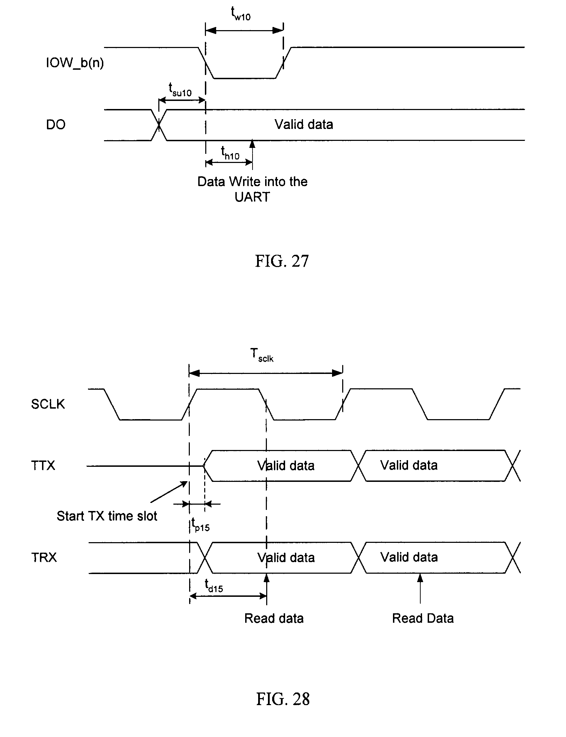

In Table 9 the Data transfer timing cycle UART-TDMA bridge is listed. The Receive TDMA→UART bridge cycle timing requirements over recommended ranges of clock cycles are shown in Fig. 27, and the Data transfer timing cycle TDMA bridge-UART is listed in Table 10.

Table 10

| Signal | Description | MIN | MAX | Unit |
|---|---|---|---|---|
| $t_{w10}$ | Pulse duration IOW_b(n) low | 1 | | clk cycle |
| $t_{su10}$ | Setup time DO valid before IOW_b(n) ↓ | 1 | | clk cycle |
| $t_{h10}$ | Hold time DO that the UART can read the data | 1 | | clk cycle |

In Fig. 28 TDMA bus read and write cycle timing requirements over recommended ranges of clock cycles are shown (Data transfer timing cycle TDMA bus), and in Table 11 the Data transfer timing cycle TDMA bus is listed.

Table 11

| Signal | Description | MIN | MAX | Unit |
|---|---|---|---|---|
| $T_{sclk}$ | Pulse duration SCLK low | 1 | | SCLK cycle |
| $t_{p15}$ | Propagation time TTX valid. | | <<1 | SCLK cycle |
| $t_{d15}$ | Delay time TRX read the data | ½ | | SCLK cycle |

TDMA Bridge: This block merges the data streams of the UARTs together, add protocol bits for the flow control and accesses the TDMA bus to write and transmit the UART data over the bus. The receive path reads the data from the TDMA bus, decodes the control bits and sends the data to the UART, configured by the protocol frame address. The bridge uses one time slot for transmitting and one time slot for receiving data over the TDMA bus.

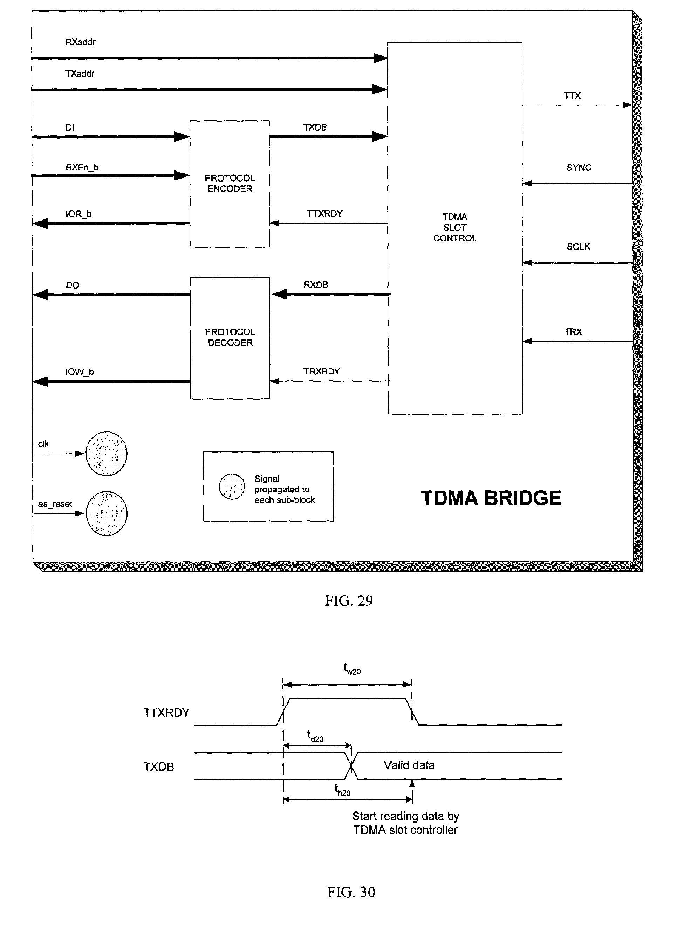

Top Design TDMA Bridge: The TDMA bridge is divided into logically sub-blocks which allows to implement the bridge in a simply way. For the data communication between the UARTs and the TDMA bridge it is necessary to store the data in FIFO registers. The FIFOs are moved into the UARTs. The reason therefore is, if less than 15 UARTs are connected to this bridge a lot of unused hardware exists in the FPGA. Fig. 29 shows the TDMA Bridge Top Design. The top design in Fig. 29 is divided into logically sub-blocks, which represent together the TDMA bridge. The details of the sub-blocks are described in the following chapters: TDMA Slot Controller, Protocol Encoder, Protocol Decoder.

Data Transmit path (UART → TDMA): For transmitting data over the TDMA bus a data request to the specific UART is made by the IOR_b(n) line from the protocol encoder block. With the same line the protocol encoder sets the correct data path in the transmit bus multiplexer and one clock cycle later, the data from the UART are read into the protocol encoder from the DI bus. The protocol encoder adds the protocol to this data. The data is propagated and hold on TXDBbus after a data request on TTXRDY line. Now the TDMA slot controller sends the character bit by bit to a time slot on the TDMA bus configured by the Txaddr bus.

Data Receive path (TDMA → UART): The TDMA slot controller scans a channel (time slot) configured by the RXaddr line on the TDMA bus. If it detects an address different form the "no data" address ("0000") it reads the byte bit by bit from the TDMA bus. Is the byte read, the slot controller propagates the character to the RXDB bus and sets TRXRDY line to high. One clock cycle later the protocol decoder reads the data. The decoder removes the protocol overhead and wait to the second protocol byte transferred from the TDMA slot controller. Is the byte received then the data are ready to be sent to the specific UART configured by address received in the protocol data frame. The bridge works time slot orientated. In the first step it builds packages of the received bits, which are sent or received by the TDMA slot controller.

TDMA Bridge Interface: Table 12 lists the most important signals from the TDMA bridge top level design displayed in Fig. 29.

| Signal Name | Description |
|---|---|
| clk | Master clock input (Test board clk = 25.175 MHz) |
| as_reset | Asynchronous master reset. |
| TRX | Serial synchronous input (TDMA bus). The TDMA bus data line is divided into a receiver and transmitter line because no tri-state signals shall be used internally in the FPGA. The TRX and TTX lines are connected externally. |
| TTX | Serial synchronous output (TDMA bus). The TDMA bus data line is divided into a receiver and transmitter line because no tri-state signals shall be used internally in the FPGA. The TRX and TTX lines are connected externally. |
| SCLK | TDMA bus synchronisation clock input. All activities over the TDMA bus are synchronised with this clock. |
| SYNC | TDMA bus time slot synchronisation input. This signal marks the first of the 64 data channels. |

| | |
|---|---|
| Rxaddr | Receive slot address input. Six data lines propagate the time slot (channel) number for reading data on the TDMA bus. |
| Txaddr | Transmit slot address input. Six data lines propagate the time slot (channel) number for transmitting data on the TDMA bus. |
| DI | Internal data bus. Eight data lines propagate the data from the transmit bus multiplexer into the TDMA bridge. |
| IOR_b(n) | Read strobe. A low level on IOR_b(n) transfers the first contents of the FIFO to the DITXn bus. |
| RXEn_b | RX FIFO empty output. Goes low when the receiver FIFO is empty. Can be used as interrupt output to another device. |
| TXDB | Internal data bus. Eight data lines propagate the data from |

| | the protocol encoder to the TDMA slot controller. |
|---|---|
| TTXRDY | Get character. Instructs the protocol encoder to set up the next character for transmitting on the TXDB bus. |
| DO | Internal data bus. Eight data lines propagate the data from the TDMA bridge into the UARTs. |
| IOW_b(n) | Write strobe. A low value on the IOW_b(n) adds the character from the DO bus into the UART's RX FIFO. |
| RXDB | Internal data bus. Eight data lines propagate the data from the TDMA slot controller to the protocol decoder. |
| TRXRDY | TDMA slot control byte received. Writes the character on the RXDB bus in the protocol decoder. |

Table 12

Table 12 lists the TDMA Bridge Interface.

Channel Priority: In this TDMA bridge a prioritisation of a asynchronous data channel can be made. That means that a prioritised UART is served first when more than one UARTs have available data. This priority makes only sense when only one byte is transferred. For transferring several bytes the delay is not very relevant because the UART will be the slowest element in the transmitting path. When one channel can be served before the other channels, then all other channels need registers for storing their bytes so that no data can go lost. Regarding to the investigation of the hardware effort no priority of a data channel will be implemented in this TDMA bridge.

Internal Timing: Transmit protocol encoder to TDMA slot controller cycle timing requirements over recommended ranges of clock cycles. The TDMA bridge transmit path timing is shown in Fig. 30.

Table 13

| Signal | Description | MIN | MAX | Unit |
|---|---|---|---|---|
| $t_{w20}$ | Pulse duration TTXRDY high | 1 | 1 | clk cycle |
| $t_{d20}$ | Delay time TXDB valid after TTXRDY ↑ | 1 | 24 [1] | clk cycle |
| $t_{h20}$ | Hold time TXDB | data hold until TTXRDY ↑ | | |

[1] The request is made 4 SCLK cycle before the data are sent out. (15 clk cycles are used calculating the address, 3 clk cycles for the delay that the data are valid on the DI bus and 6 clk cycles for the inaccuracy of the SCLK timing that no problems with external devices occurs.)

Table 13 lists the Data transfer timing cycle protocol encoder to TDMA slot controller.

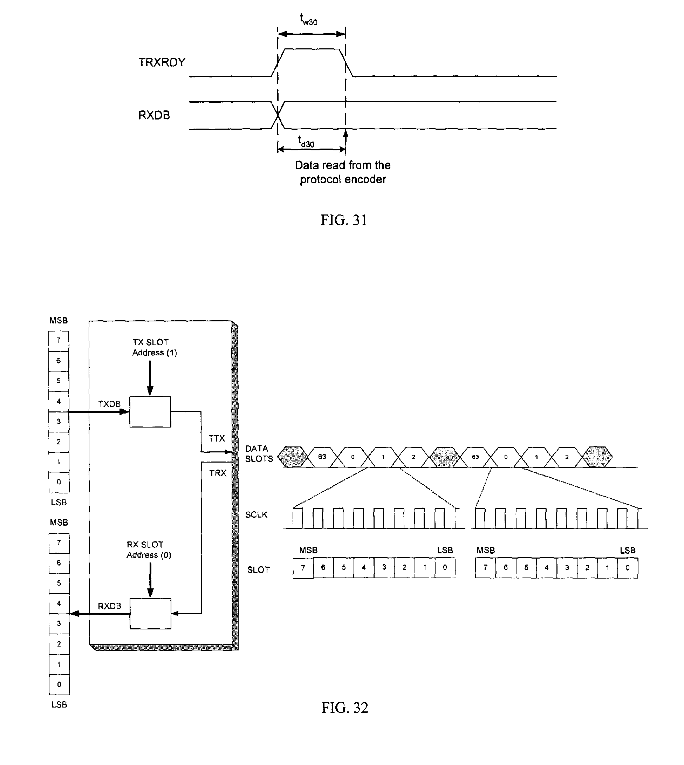

Receive TDMA slot controller to protocol encoder cycle timing requirements over recommended ranges of clock cycles. The TDMA bridge receive path timing is shown in Fig. 31.

Table 14

| Signal | Description | MIN | MAX | Unit |
|---|---|---|---|---|
| $t_{w30}$ | Pulse duration TRXRDY high | 1 | 1 | clk cycle |
| $t_{d30}$ | Setup time RXDB valid before TRXRDY ↑ | 1 | | clk cycle |

Table 14 lists Data transfer timing cycle TDMA slot controller to protocol decoder.

Synchronisation TDMA bridge protocol encoder (Transmit path): The synchronisation between the TDMA slot controller and the protocol encoder is made with a handshaking. The TDMA slot sends a pulse on the TRXRDY line after this pulse it waits 4 SCLK cycles before reading data. The protocol encoder has to guarantee that the data after this SCLK cycles are valid. This 4 SCLK cycles correspond with 24 clk cycles (see below). The 24 clk cycles includes: 15 clk cycles for generating the next UART address, 3 clk cycles for the propagation from the UART RX FIFO to the DI bus, 6 clk cycles safety when the clk and the SCLK has a too great inaccuracy of the factor of 6.

TDMA Slot Controller: The TDMA slot controller sends bytes to a specific slot number configured by the TXaddr bus. It scans further a specific time slot configured by the RXaddr bus for evaluating received data bytes and puts those to the protocol decoder. The principle of encoding and decoding time slots, that is the Principle of the Time Slot Controller is displayed in Fig. 32.

The time slots for transmitting data and receiving data are configured with the values in Table 15.

Table 15

| RX time slot address Rxaddr | TX time slot address Txaddr | Time slot number |
|---|---|---|
| "00 0000" | "00 0000" | 0 |
| "00 0001" | "00 0001" | 1 |
| "00 0010" | "00 0010" | 2 |
| | | |
| | | |
| "11 1110" | "11 1110" | 62 |
| "11 1111" | "11 1111" | 63 |

Table 15 lists the TDMA time slot addressing.

Protocol Encoder: The protocol encoder packs the address (4 bit) and the data byte (8 Bit) from the UART in a protocol data frame and sends it in 2 steps over the TXBD bus to the TDMA slot controller. In step 1 the address from the first data byte and the upper nibble from the data byte are transferred to the time slot controller. In step two the lower nibble of the data byte 1 and the address of the next data byte are transferred to the TDMA slot controller. This block generates the 4 bit address under the consideration, which UARTs have data available for transferring to the TDMA bus. With this information the protocol encoder starts a data request through the IOR_b(n) line by the UART n, then the UART set up the requested data to the DITXn bus and hold it until a new request is made. The transmitter address generated by this device and the data on the DI bus are merged together to a protocol data frame.

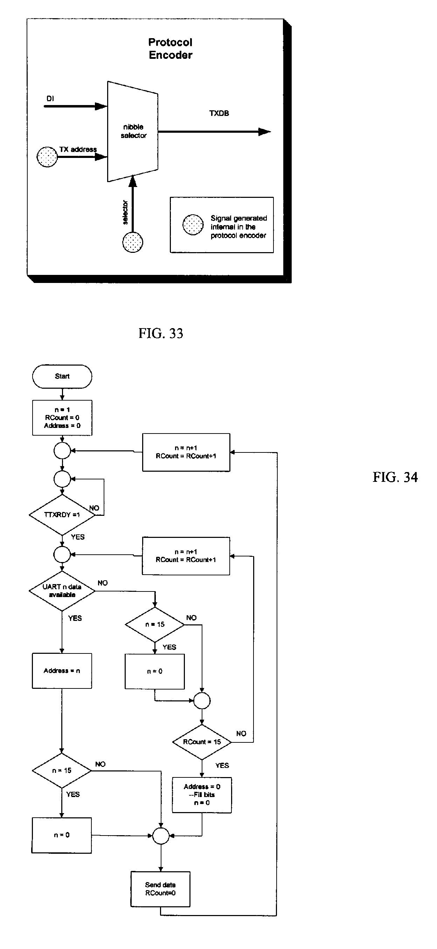

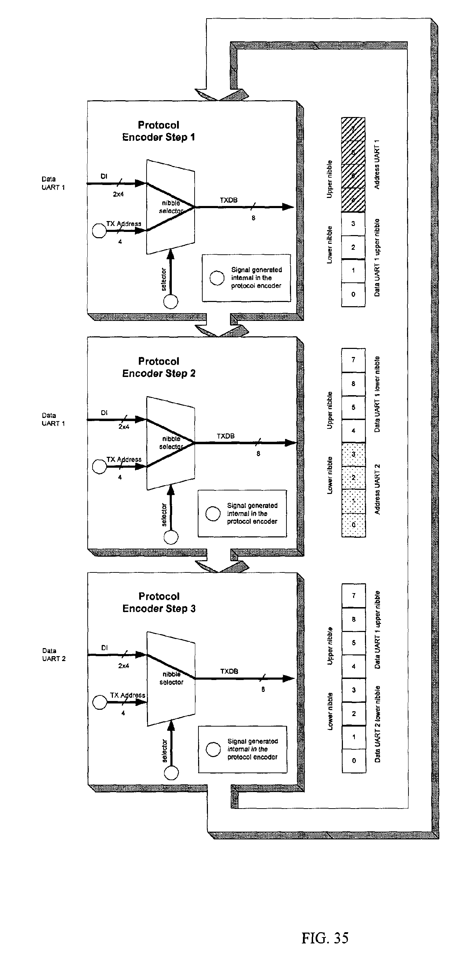

In Fig. 33 the Principle of the protocol Encoder switch is shown. The protocol encoder scans the RXEn_b bus of the UARTs. If no data for transmitting are available in the UARTs then it sets the TXDB bus to "0000". This data nibble transferred to another device signalises that no data is transferred. If data are available, then the protocol encoder generates an address and requests the data byte by the specific UART. This address generation rule is illustrated in Fig. 34. The principle how the data can be propagated to the TDMA slot controller, that is the Principle of the protocol encoding rule is displayed in Fig. 35. The UART in this embodiment can be replaced by an external UART (TL16C554). For this UART an additional block must be generated to connect to the TDMA bridge. The TL16C554 use the interrupt line that signalise when the receive FIFO in the UART has data available that should be requested.

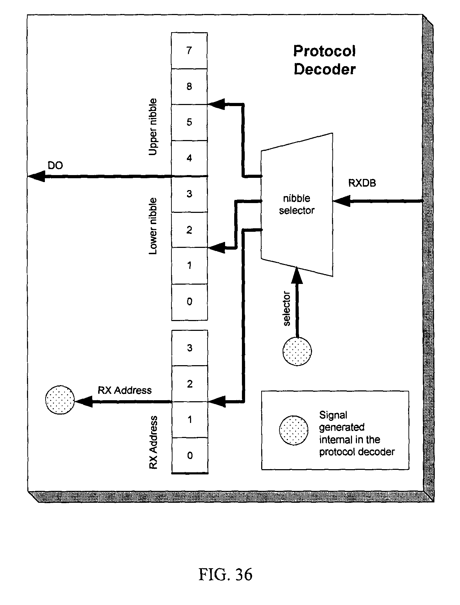

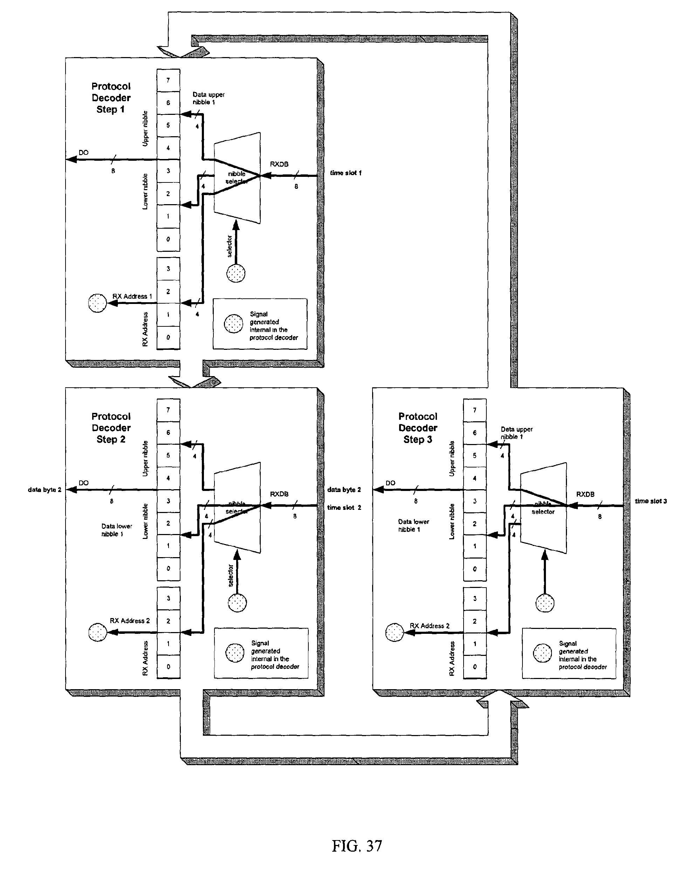

Protocol Decoder: The protocol decoder removes the protocol overhead from the received bytes and propagates it over the DO bus to the UART, specified by the address in the protocol frame. When the TRXRDY line goes high then the protocol decoder reads the byte from the RXDB bus. A multiplexer in the decoder separates the address and the data nibbles by reading this byte. The data byte can be forwarded to the UART, specified by the address read in the protocol frame, when two data bytes have been received. In case the received address is "0000" no data is propagated to the UARTs because this address marks that no data is transferred. Otherwise if valid data have been received, then the protocol decoder sets the data to the DO bus and writes it to the UART with the IOW_b(n) line. The principle of the protocol decoder switch is illustrated in Fig. 36. The principle of switching the received data on the RXDB bus, that is the Principle of the protocol decoding rule is displayed in Fig. 37.

UART: The UART_SW is a full duplex UART for serial asynchronous data communication. It is set to a fix baud rate of 9600 bps. The data format is set fix to 1 start bit, 8 data bits, no parity and 1 stop bit. The signal levels are defined in a way, that in a further step this UART can be replaced by an external UART TL16C554.

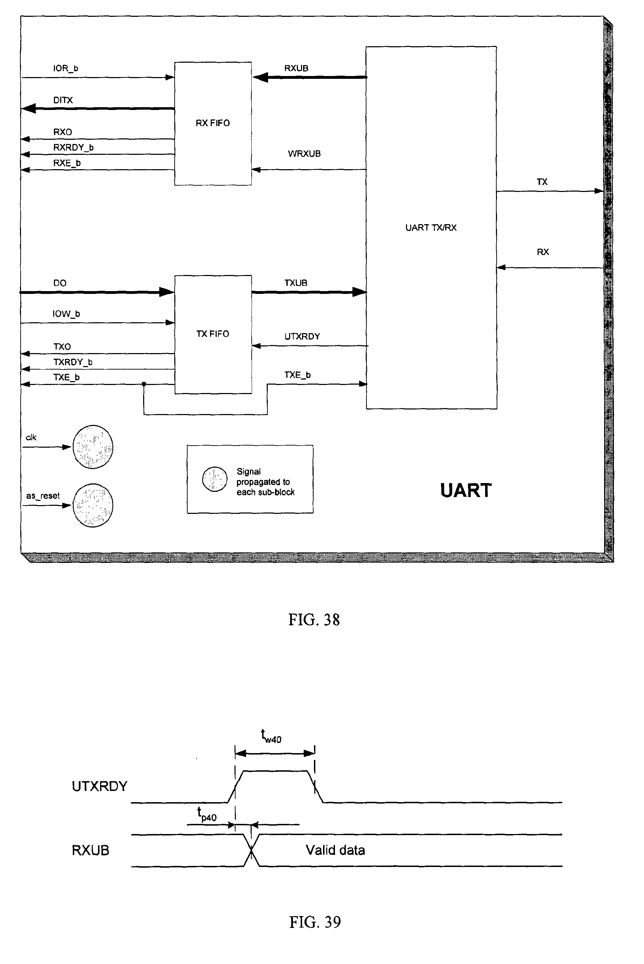

Top Design UART: The UART consists of a FIFO for receiving and a FIFO for transmitting data. These FIFOs ensure that no data are lost when the TDMA bridge serve the UART to fast or request the received data late. The UART_RX_TX block requests the data by the transmitter FIFO converts and sends it as a serial data stream or receives a serial data stream, converts it to a parallel character and writes it to the receiver FIFO. The Top Design UART is illustrated in Fig. 38.

Interface Description: Table 16 lists the most important signals of the UART top level design, i.e. the UART Interface, that are displayed in Fig. 38.

Table 16

| Signal Name | I/O | Description |
|---|---|---|
| clk | I | Master clock input (Test board clk = 25.175 MHz) |
| as_reset | I | Asynchronous master reset. |
| IOR_b | I | Read strobe. A low level on IOR_b transfers the first contents of the FIFO to the DITX. |
| RXO | O | RX FIFO overflow output. This signal goes high when an overflow in the RX FIFO occurs. Is hold until one entry in the FIFO is cleared. |
| RXRDY_b | O | RX FIFO full output. Goes low when the receiver FIFO is full. |
| RXE_b | O | RX FIFO empty output. Goes low when the receiver FIFO is empty. Can be used as interrupt output to another device. |
| DITX | O | Output data bus. Eight data lines propagate the received data to another device. |
| RXUB | - | Internal RX data bus. Eight data lines propagate the character from the UART_RX_TX to the RX FIFO. |
| WRXUB | - | Write strobe. A high value on this line adds the character on the dbus_rx in the RX FIFO. |
| RX | I | Serial asynchronous input. The LSB from a data character is received first |
| TX | O | Serial asynchronous output. The LSB from a data character is transferred first. |
| DO | I | Input data bus. Eight data lines propagate a character from an external device to the transmit FIFO for transmitting over the serial_tx output. |
| IOW_b | I | Write strobe. IOW_b allows another device to write data into the transmit FIFO. |
| TXO | O | TX FIFO overflow output. This signal goes high when an overflow in the transmit FIFO occurs. Is hold to high until one entry in the FIFO is cleared. |
| TXRDY_b | O | TX FIFO full output. Goes to low when the transmit FIFO is full. |
| TXE_B | O | TX FIFO empty output. Goes to low when the transmit FIFO is empty. |
| TXUB | - | Internal TX data bus. Eight data lines propagate the data from the transmit FIFO to the transmitter of the UART. |
| UTXRDY | - | Clear strobe. A high value on this line clears the current entry in the receiver FIFO. |

Internal timing: Transmit TX FIFO→UART RX/TX cycle timing requirements over recommended ranges of clock cycles are shown as UART transmit path timing. In Table 17 the Data transfer timing cycle TX FIFO-UART RX/TX is listed.

Table 17

| Signal | Description | MIN | MAX | Unit |
|---|---|---|---|---|
| $t_{w40}$ | Pulse duration UTXRDY high | 1 | 1 | clk cycle |
| $t_{p40}$ | Propagation time TXUB valid after UTXRDY $\uparrow$ | | <<1 | clk cycle |

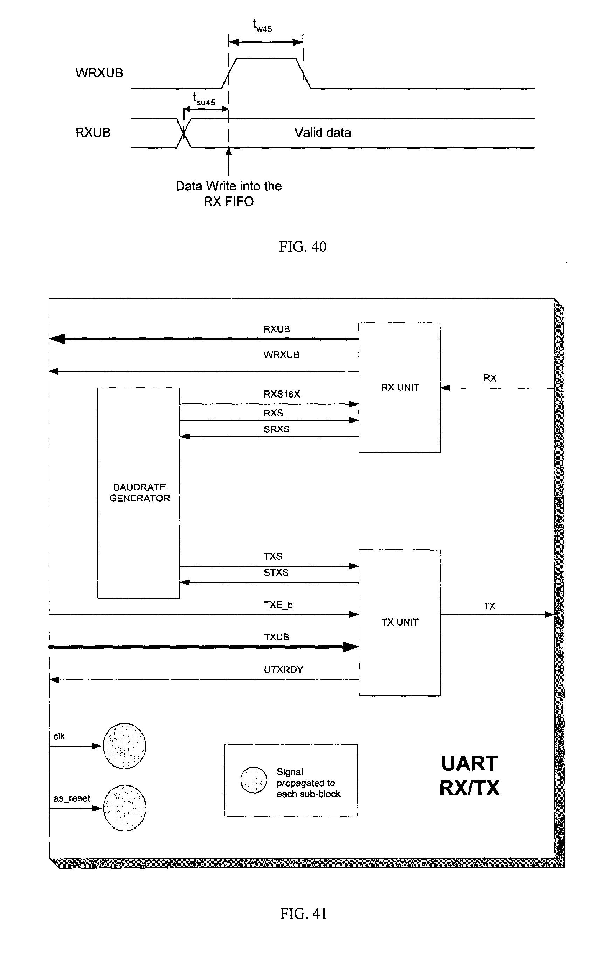

Receive RX FIFO → UART RX/TX cycle timing requirements over recommended ranges of clock cycles. In Fig. 40 the UART receiving path timing is illustrated. In Table 18 the Data transfer timing cycle RX FIFO-UART RX/TX is listed.

Table 18

| Signal | Description | MIN | MAX | Unit |
|---|---|---|---|---|
| $t_{w40}$ | Pulse duration WRXUB high | 1 | 1 | clk cycle |
| $t_{su45}$ | Setup time RXUB valid before WRXUB $\uparrow$ | 1 | | clk cycle |

TX FIFO: The TX FIFO is a register that works according to the first in first out principle. The minimum size of this FIFO is 2. The TXE_B is low when the FIFO is empty. When the IOW_b line goes high the data from the DO bus is added as new entry in the FIFO and the TXE_B line goes high to signalise that the TX FIFO in not empty. The TXRDY_b line goes low when the maximum entries are added to the FIFO and signalises that the FIFO is full. By writing one entry more, the TXO line goes high and signalises that an error has occurred. The TXO signal is cleared when one entry in the FIFO is read out. The entry that forced the overflow in the TX FIFO is not added into the FIFO. When the UTXRDY line goes high the first entry in the FIFO is propagated and hold on the TXUB bus. This entry is cleared in the FIFO and can not be read again. The TXE_B line goes low when all entries have been read out.

RX FIFO: The RX FIFO is a register that works according to the first in first out principle. The minimum size of this FIFO is 2. The RXE_b line goes low when the FIFO empty. When the WRXUB line goes high, the data is added as new entry in the FIFO from the RXUB bus and the RXE_b line goes high to signalise that the RX FIFO in not empty. When the maximum entries have been added to the FIFO the RXRDY_b line goes low to signalise that the FIFO is full. By writing one entry more, the RXO line goes high and signalises that an error has occurred. The RXO signal is cleared when one entry in the FIFO is read out. The entry that forced the overflow in the RX FIFO is not added into the FIFO. When the IOR_b line goes low the first entry in the FIFO is propagated and held on the DITX bus. This entry is cleared in the FIFO and can not be read again. The RXE_b line goes low when all entries have been read out.

UART TX RX: The UART TX/RX block is divided into a transmit unit which reads a character from the TX FIFO and converts it into a serial data stream and a receive unit, that reads a serial data stream and converts it into data characters and write it to the RX FIFO. The baud rate generator generates the enable timing signals for the serial data streams. The UART RX/TX is illustrated on Fig. 41.

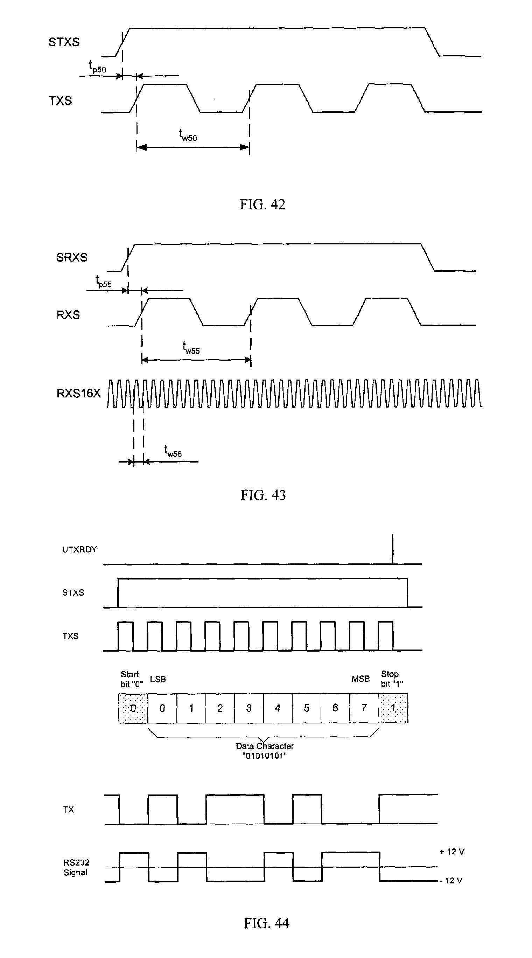

Internal timing: Start TX sample cycle timing requirements over recommended ranges of clock cycles are shown in Fig. 42 and the TX baud rate timing is listed in Table 19 as Start TX sample timing cycle.

Table 19

| Signal | Description | MIN | MAX | Unit |
|---|---|---|---|---|
| $t_{w50}$ | Pulse duration TXS | 1 | 1 | SCLK cycle |
| $t_{p50}$ | Propagation time STXS high start TXS sample | 1 | 1 | clk cycle |

Start RX sample cycle timing requirements over recommended ranges of clock cycles is illustrated in Fig. 43, and in Table 20 the RX baud rate timing is listed as Data transfer timing cycle TX FIFO-UART RX/TX.

Table 20

| Signal | Description | MIN | MAX | Unit |
|---|---|---|---|---|
| $t_{w55}$ | Pulse duration RXS | 1 | 1 | SCLK cycle |
| $t_{p55}$ | Propagation time STXS high start RXS sample | 1 | 1 | clk cycle |
| $t_{w56}$ | Pulse duration RXS16X | 1/16 | 1/16 | SCLK cycle |

TX Unit: After a low high transition on TXE_B line the TX UNIT starts the baud rate generator by setting the STXS line high until the character is sent out over the TX line. In the period cycle of this signal the data is transferred out to the TX line. By sending out the character in the middle of the stop byte the TX unit sets the STXS line high which clears the sent character in the TX FIFO and sets the next character for sending out on the TXS bus. When the TX FIFO is empty the TX unit switches off the baud rate sample signal by set the STXS line low an goes into a wait state until the TXE_B goes high again. The STXS line goes only low when the TX FIFO is empty. The according TX unit signals are shown in Fig. 44.

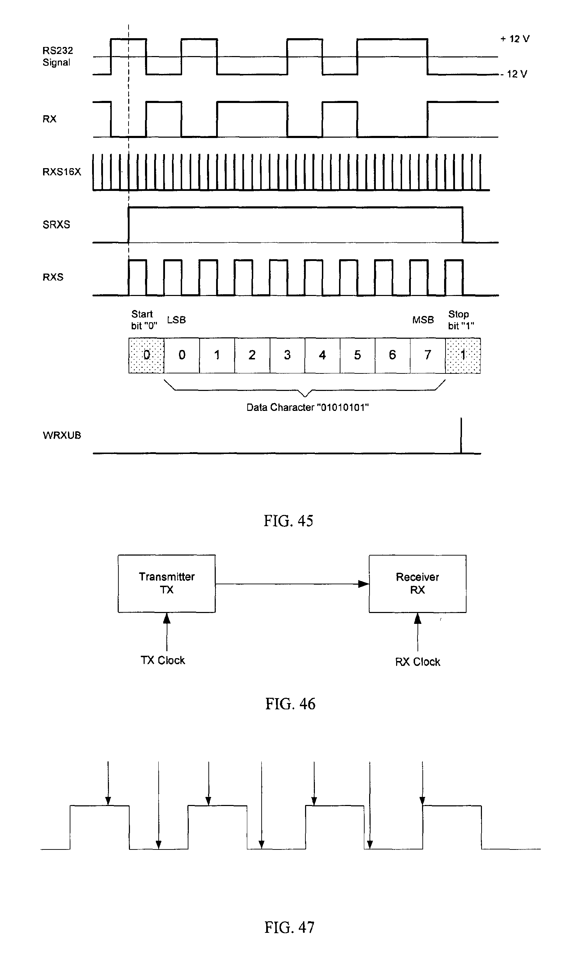

RX Unit: After a high low transition on the RX line the receiver unit detects the begin of the start bit. Now the RX unit scans this signal with the 16 x baud rate. After reading 8 low-levels by using the oversampling signal the RX unit starts the RX sample signal (RXS) by set the SRXS line high until the whole character is read. The bits on the RX signal are read frequently with the RXS sample frequency and propagated to the RXUB bus. When all data bytes on the RX line are read, then the RX unit sets the WRXUB line high after the half stop bit is on the RX line and writes the data into the RX FIFO. In the middle of the stop bit the SRXS line is set low and the RX unit goes into a wait state. The respective RX unit signals are illustrated in Fig. 45.

Baudrate Generator: The baud rate generator generates symmetric baud rate enable signals for the RX and TX units. Goes the STXS line high then the baud rate generator divide the clk signal by counting up to the used baud rate of 9600 bps and propagate it forward to the TXS line from the TX unit. The sampling is stopped when the STXS line goes low. The RX unit needs a permanent 16 x baud rate signal and a 1x baud rate signal. The 1 x baud rate signal can be started with the SRXS line. The 1x baud rate signal stops when the SRXS line goes low.

1X vs 16X clock Signals: These signals are handled according to EXAR XR-88C681 DART datasheet which is presented in parts in the following.

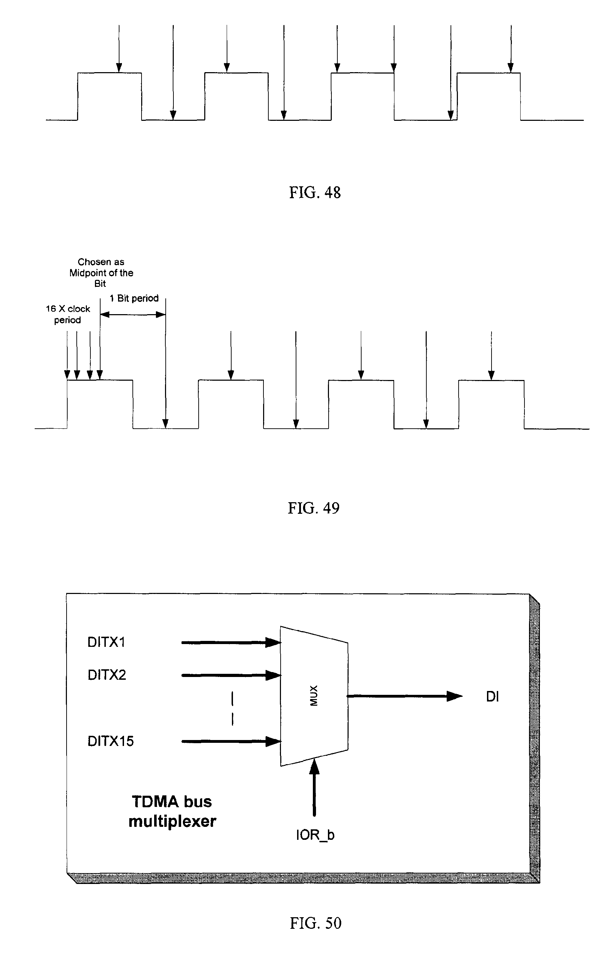

The terms "1X clock" and "16X clock" have been applied throughout this text. Therefore, it is important to discuss their meaning and significance. A "16X clock" over-samples the received serial data by a factor of 16. Whereas a "1X clock" only samples the signals once per bit period. From this one should correctly conclude that greater accuracy (lower bit error rates) are achieved via the use of the 16X clock in lieu of the 1X clock. A receiver in one of the DUART channels is clocked by a local timing source (from the Timing Control Block). If this receiver is active and is receiving data from a remote serial transmitter, that transmitter is also clocked by its own local timing source. Hence, there is no guarantee that the clock frequency for the receiver is exactly the same as that for the remote transmitter. This is a characteristic of asynchronous serial data communication. Although the receiver and remote transmitter have been programmed to receive and transmit data at exactly the same baud rate, sufficient differences in the frequencies of the two clock sources (local receiver and remote transmitter) can contribute to bit errors in the receiving process, as presented in the following discussion. Suppose that we have a serial data transmission system as depicted in Fig. 46 as an Example of a serial Data Transmission System. This system consists of a remote transmitter (TX), and a local receiver (RX). Let us further assume that the receiver is clocked by a source that is slightly faster than that of the transmitter, and that the receiver is only sampling the serial data once per bit period. Fig. 47 presents the results of this phenomenon as Receiver (1X) Sampling, if the RX Clock is Slightly Faster than the TX Clock. Fig. 47 shows that the phase relationship between the receiver's sampling point and each serial data bit is changing. In this case, the receiver is sampling each serial data bit, earlier and earlier in the bit period, with each successive data bit. This phenomenon is known as receiver drift. If there is no correction for receiver drift, there will be many errors in the transmission and reception of this serial data, as depicted in Fig. 48, which is an Illustration of an Error due to Receiver Drift. Fig. 48 shows the receiver sampling an eight bit string of data with bit pattern 10101010. In is interesting to note that, in Fig. 48, the receiver sampled 10101101. It should be noted that receiver drift can also be a problem is the local receiver is slower than the remote transmitter clock. In general the bit-error-rate, for this "uncorrected" system is a function of the timing differences between the TX and RX local clock signals. However, in order to correct for receiver drift and to minimise the BER during serial data transmission, many UARTs in the market place, employ receiver oversampling of the START bit. When this feature is employed, the receiver, upon detection of the START bit, will begin oversampling this START bit by some integer factor. Typically, for most present day UARTs, this over-sample factor is 16. Therefore, in these devices, when the receiver detects the occurrence of a START bit, it (the receiver) will begin oversampling this START bit by a factor of 16. However, after 8 16X clock periods has elapsed, the receiver will assume this point (within the START bit) to be the mid point of the bit period, an ill cease oversampling of the START bit and of the subsequent data. From this point, through the end of the character, the receiver will sample the serial data stream at the 1X rate. Stated another way, once the receiver has reached, what it believes to be the mid-point of the START bit, the receiver will, from that point, begin sampling the serial data at 1-bit period interval. After the receiver has received the STOP bit, it will await the occurrence of the START bit. Once the START bit has been detected, this oversampling procedure is repeated. Fig. 49 shows a Typical Sampling pattern of a Receiver.

The oversampling technique mitigates many of the serial data bit errors by attempting to adjust the receiver sampling point, to near the midpoint of the bit periods, on a character to character basis. This approach is successful for two reasons: It offers periodic correction to the receiver sampling point, and it limits the receiver drift phenomenon (between sampling point adjustments) to typically at most 12 bits (8 bit character + parity and STOP bits). Therefore, if the user selects to receive data at a baud rate of 9600 baud; upon detection of the START bit, the receiver will begin sampling the data at (9600 x 16) = 153,600Hz. However, once the receiver has oversampled up to the 8th 153,6kHz clock pulse, it will mark this location as the midpoint of the START bit. From this point on, the 153,6kHz clock signal is divided by 16 to generate the sample clock (9600Hz) for the remaining data and overhead bits of the character.

TX Bus Multiplexer: The transmit bus multiplexer switches the correct DITXn bus from the UART, specified by the IOR_b(n) bus to the DI bus. The principle of this switch is displayed in Fig. 50 which illustrates the Principle of the TDMA bus multiplexer.

TDMA Bus Master Controller: The TDMA bus master controller generates the clock and synchronisation signal for the TDMA bus. The clock frequency is 4.096 MHz ( calculation see formula bellow). This 4.096 MHz are derived from the data rate per channel and the number of channels which are transferred over the TDMA bus. The TDMA bus SCLK frequency calculation is given by:

$$SCLK = NumberOfChannels \cdot DataRatePerChannel \tag{9}$$

$$SCLK = 64 \cdot 64000\,bit/s = 4.096\,Bit/s \Rightarrow 4.096\,MHz$$

wherein:

NumerOfChannels:      Number of data slots (channels) transferred over the TDMA bus.
DataRatePerChannel:      Bit rate per data channel.

For a synchronous design the clk design must be count up to a calculated factor and then enable the SCLK line. In this design the SCLK is build from a 25.175MHz clk.
The TDMA bus SCLK factor calculation is given by:

$$CountFactor = \frac{clk}{SCLK} = \frac{25175000}{4096000} \ 6.1462 \qquad (10)$$

wherein

CountFactor:      Factor for generate an enable signal for the SCLK.

When the SCLK is built with a factor of 6 then it gets the following percentage difference to the theoretical calculated SCLK:
The Percentage fault of the SCLK frequency is given by:

$$SCLK = \frac{clk}{CountFactor} = \frac{25175000}{6} = 4.195833 \, MHz \qquad (11)$$

$$Fault[\%] = \frac{100\%}{SCLKtheoretical} \cdot SCLKreal - 100$$

$$Fault[\%] = \frac{100\%}{4096000} \cdot 4195833 - 100 = 2.44\%$$

wherein

Fault:      Percentage fault of the generated SCLK.

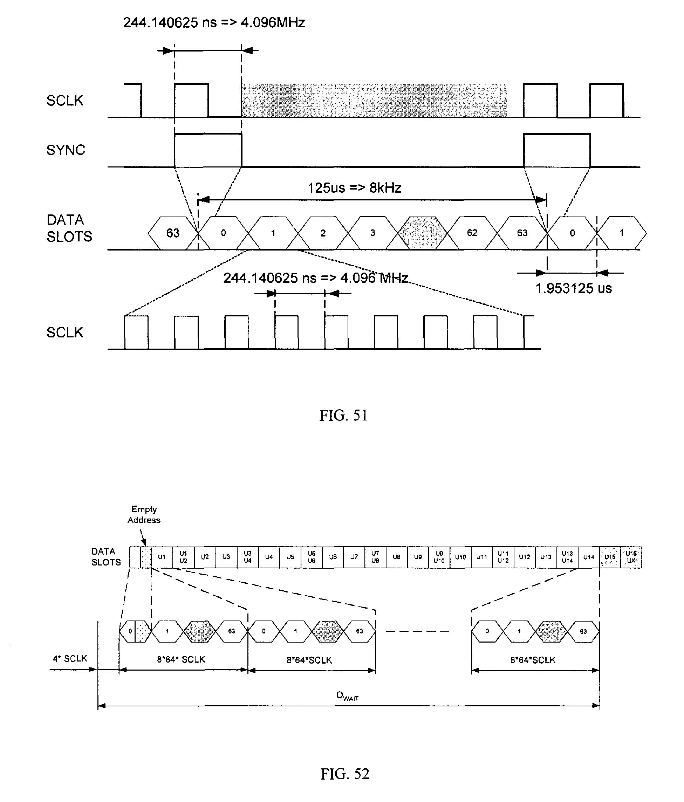

This TDMA bus master controller is not used for further work in the GSM-R project, so that the fault for this clock will be acceptable and no external oscillator circuit will be added to the FPGA. The TDMA SYNC signal signalise the start of the channel 0 which is transferred over the TDMA bus. Each device connected to this TDMA bus must work with this SCLK and SYNC signal for the synchronisation between the devices. The respective Timing diagram TDMA master bus controller is shown in Fig. 51.
For the Calculation transfer delay UART RX→ TDMA bus → UART TX the transfer delay is calculated in clk cycles. For the calculation the UART data rate is set to 9600 bps for the calculated path and to 1200 bps for the other devices. The clk frequency is set to the test board frequency (25.175 MHz). In this case one bit transferred with 9600 bps is calculated with 2622 clk cycles. The TDMA SCLK cycle calculated with 6 clk cycles per SCLK. The delay times from section 0 can not be used directly because the impact of the UARTs is not considered in these calculations.
Calculation optimal delay: This delay time represent the fastest delay time for receiving a character in the UART (transmitter side), transmit it over the TDMA bus and send the character out by the UART at the receiver side.

| Description | Action | | | Needed clk cycles |
|---|---|---|---|---|
| serial Data → | RX ↓ | → | WRXUB ↑ | 24910 |
| UART (RX) | WRXUB ↑ | → | RXEn_b ↓ | 1 |
| UART RX | RXEn_b ↓ | → | TTX start ↑↓ | 24 |
| FIFO → TDMA | TRX start ↑↓ | → | TRXRDY ↑ | 3117 |
| bus → UART | TRXRDY ↑ | → | IOW_b ↓ | 1 |
| TX FIFO | LOW_b ↓ | → | TXE_b ↑ | 1 |
| UART (TX) → | TXE_b ↓ | → | STXS ↑ | 1 |
| serial data | STXS ↑ | → | TXS (sample start) | 1 |
| | TXS start | → | TX | 26220 |
| | | | Total clk cycles | 54279 |

Table 21

In Table 21 the Calculation optimal delay DATA →UART→TDMA bus → UART→DATA is listed. The pertaining Optimal delay time for the test board is given by:

$$D_{OD} = \frac{1}{f_{board}} \cdot clk\_cycles = \frac{1}{25175000s^{-1}} \cdot 54279 = 2.156ms \qquad (12)$$

The propagation delay can be ignored for this calculation because they will have less impact to this transfer delay. For the timing analysis it is sufficient to consider only the receiving and transmission time from the UART and the transfer delay for transferring the data over the TDMA bus. The Approximation optimal delay DATA →UART→TDMA bus → UART→DATA is listed in Table 22.

| Description | Action | | | | Needed clk cycles |
|---|---|---|---|---|---|
| UART RX | RX ↓ | → | | WRXUB ↑ | 24910 |
| TDMA bus | TRX start ↑↓ | → | | TRXRDY ↑ | 3117 |
| UART TX | TXS start | → | | TX | 26220 |
| | | | Total clk cycles | | 54247 |

Table 22

The result is

$$D_{OD} \approx \frac{1}{25175000s^{-1}} \cdot 54247 = 2{,}15\,ms$$

Calculation worst case delay: This delay time represents the minimum delay time for receiving a character in the UART (transmitter side), transmit it over the TDMA bus and sending the character out by the UART at the receiver side. The Calculation worst case delay DATA →UART→TDMA bus → UART→DATA is listed in Table 23.

| Description | Action | | | | Needed clk cycles |
|---|---|---|---|---|---|
| serial Data → UART (RX) | RX ↓ | → | | WRXUB ↑ | 25073 |
| | WRXUB ↑ | → | | RXEn_b ↓ | 1 |

| UART RX | RXEn_b ↓ → | TTX start ↑↓ | 67584 |
|---|---|---|---|
| FIFO → TDMA bus → UART TX FIFO | TRX start → ↑↓ | TRXRDY ↑ | 3117 |
| | TRXRDY ↑ → | IOW_b ↓ | 1 |
| | LOW_b ↓ → | TXE_b ↑ | 1 |
| UART (TX) → serial data | TXE_b ↓ → | STXS ↑ | 1 |
| | STXS ↑ → | TXS (sample start) | 1 |
| | TXS start → | TX | 26220 |
| | | Total clk cycles | 121999 |

Table 23

The pertaining delay for the worst case on the test board is given by:

$$D_{WC} = \frac{1}{f_{board}} \cdot clk\_cycles = \frac{1}{25175000s^{-1}} \cdot 121999 = 4.846\,ms \tag{13}$$

The propagation delay can be ignored for this calculation because they will have less impact on this transfer delay. For the timing analysis it is sufficient to consider only the receiving and transmission time from the UART and the waiting time until the data can be served and the transfer delay for transferring the data over the TDMA bus. The Approximation optimal delay DATA →UART→TDMA bus → UART→DATA is listed in Table 24.

| Description | Action | | Needed clk cycles |
|---|---|---|---|
| UART RX | RX ↓ → | WRXUB ↑ | 25073 |
| TDMA bus | RXEn_b ↓ → | TTX start ↑↓ | 67584 |
| | TRX start ↑↓ → | TRXRDY ↑ | 3117 |
| UART TX | TXS start → | TX | 26220 |
| | | Total clk cycles | 121994 |

Table 24

The delay for the worst case on the test board is given by

$$D_{WC} \approx \frac{1}{25175000\,s^{-1}} \cdot 121994 = 4.85\,ms$$

In the following Various Delay Times will be described and calculated.

Delay RX $\downarrow\rightarrow$ WRXUB $\uparrow$: The delay time is the time between the detection of the start bit on the UART RX line until the WRXUB from the UART goes high. An important fact is, that the detection of the start bit is made with the 16 x oversample bit rate and that the WRXUB signal it set to high after reading the half stop bit. The Delay for writing data into the UART is given by:

$$D_1 = BR \cdot (SB + DB + 0.5 \cdot SB) \tag{14}$$

$$D_1 = 2622 \cdot (1 + 8 + 0.5 \cdot 1) = 24909\,clk\_cycles$$

The Worst case delay start bit detection is given by:

$$D_{w_{\text{COV}}\ ersamtple16} = \frac{clk}{BitRate_{UART} \cdot 16}$$

$$D_{w_{\text{COV}}\ ersample16} = \frac{25175000}{9600 \cdot 16} = 164\,clk\_cycles \tag{15}$$

The Worst case delay start bit detection and reading data is given by

$$D_{wc2} = D_{w_{\text{COV}}\ ersample16} + D_1 = 25073\,clk\_cycles \tag{16}$$

The Optimal case delay start bit detection and reading data is given by:

$$D_{oc2} = D_{o_{\text{COV}}\ ersample16} + D_1 = 24910\,clk\_cycles$$

wherein:

| | |
|---|---|
| $D_1$: | Delay time start detected until the data is written into the UART RX FIFO [clk_cycles]. |
| $D_{wcoversample16}$: | Worst case delay time delay to detect a high low transition of the start bit on the RXn line (depending on the oversampling factor) [clk_cycles]. |
| $D_{ocversample16}$: | Optimal delay time delay to detect a high low transition of the start bit on the RXn line is 1 clk cycle. |
| $D_{oc2}$: | Optimal delay time to detect the start bit until the data is written into the UART RX FIFO [clk_cycles]. |
| $D_{wc2}$: | Worst case delay time to detect the start bit until the data is written into the UART RX FIFO [clk_cycles]. |
| $BR$: | clk cycles for reading one bit on the asynchronous RX line [clk_cycles]. |
| $SB$: | Number of start bits |
| $DB$: | Number of data bits |
| $SB$: | Number of stop bits |

Delay WRXUB $\uparrow\rightarrow$ RXEn_b $\downarrow$: Delay time when the UART RX/TX block writes the received data into the UART RX FIFO until the RX empty signal (RXEn_b) goes low.

Delay RXEn_b $\downarrow\rightarrow$ TTX start $\uparrow\downarrow$: Delay time when the RXEn_b line goes low until the TDMA SLOT controller starts sending out the character from the TXDB bus. This time including the creation of the address when the TTXRDY line goes high and the delay when other UARTs are served first. In the Optimal case the data from the UART is just received before the TTXRDY line goes high and no other DART has data for transmission. Or this UART is the first served device. The Delay time is illustrated in Fig. 30. In the Worst case the TTXRDY line goes high and a fill bit is sent. Between the next TTXRDY request all other UARTs receive data and are served before the UART that we calculate. In this case we have to wait until the fill nibble and the data from the other 14 UART are sent. The Time slots needed for the address fill nibble and 14 data protocols are shown in Fig. 52.

For the Calculation number of time slots used for 14 protocol frames + the address from the fill nibble the Number of needed time slots is given by:

$$n_f = \frac{nu \cdot pb}{b} + ea = \frac{14 \cdot 12}{8} + 0.5 = 21.5 \qquad (18)$$

21.5 TDMA slots can use maximal 22 time slots for transferring data because it only can start at two positions in the protocol frame(see Fig. 52). The Delay time for transferring n protocol frames is given by:

$$D_{wait} = n_{f_{max}} \cdot dn \cdot b \cdot bd = 22 \cdot 64 \cdot 8 \cdot 6 = 67584 \, clk\_cycles \qquad (19)$$

wherein

$n_f$:      Number of data slots needed for transferring data.
$n_{fmax}$:      Maximal number of data slots needed for transferring data (worst case).
nu:      Number of protocol frames transferred.
pb:      Bits per protocol frame.
ea:      Number of data slots needed for address fill bits.
$dn$:      Number of channels on the TDMA bus.
$b$:      Number of bits per data channel (8 in our case)
$bd$:      Number of clk cycles for one SCLK cycle.
$D_{wait}$:      Delay time for transferring n protocol frames [clk_cycles].

Delay TRX start ↑↓→ TRXRDY ↑: Delay time when the data are just started to send out until the receiving TDMA slot controller sets the TXRDY signal. Especially is, that the last bit is read after the half SCLK cycle. The Delay time for transferring one data character on the TDMA bus is given by:

$$D_{TDMA} = cn \cdot b \cdot bd + b \cdot bd - \frac{bd}{2} \qquad (20)$$

$$D_{TDMA} = 64 \cdot 8 \cdot 6 + 8 \cdot 6 - \frac{6}{2} = 3117 \, clk\_cycles$$

wherein

$D_{TDMA}$:      Delay time for transferring one data character on the TDMA bus [clk_cycles]
$cn$:      Number of channels on the TDMA bus
$b$:      Number of bits per data channel (8 in our case)
$bd$:      Number of clk cycles for one SCLK cycle.

Delay TRXRDY ↑→ IOW_b ↓: The delay time between the TDMA slot controller sets the TTXRDY high until the IOW_b is set low for writing the data on the DO bus to the specific UART.

Delay LOW_b ↓→ TXE_b ↑: The delay time between the data is written into the UART TX FIFO until the TX FIFO empty line (TXE_b) goes low.

Delay TXE_b ↓→ STXS ↑: The delay time between the TXE_b line goes low until the baud rate generator start signal (STXS) goes high.

Delay STXS ↑ → TXS (sample start): The delay time between the STXS signal goes high until the baud rate sample on the TXS line is started. The Delay time is shown in Fig. 42.

Delay TXS start → TX: The delay time from start sampling until the stop bit is sent out over the TX line in the UART. The Delay time send serial data streams is given by:

$$D_{UTX} = BR \cdot (SB + DB + SB) \tag{21}$$

$$D_{UTX} = 2622 \cdot (1 + 8 + 1) = 26220\,clk\_cycles$$

wherein

$D_{UTX}$:    Delay time start sampling until the stop bit is sent [clk_cycles]
$BR$:       clk cycles for sending one bit on the asynchronous RX line [clk_cycles]
$SB$:       Number of start bits
$DB$:      Number of data bits
$SB$:       Number of stop bits.

The general aspect of the invention are: For merging more than one data channel to the TDMA bus a protocol with 4 address and 8 data bits is created. It handles the flow control on the bus and helps to separate the received data. The concept of the circuit based on the fact that it will be implemented in hardware (into a FPGA). In the coarse top down design the circuit is divided into UARTs, a TDMA bridge, a bus multiplexer and TDMA master bus controller. The sub-blocks represent itself logical units that can be implemented separately. For each sub-block an interface and timing description is made for illustrating how the circuit can be realised. Based on this information a performance analysis of the whole circuit is made.

The advantage of the invention over the prior art is visible form the performance of the simulated and tested embodiment: 5 devices can be connected to the TDMA bus with a baud rate of 9600bits/s; a maximum of 15 devices can be connected to the TDMA bus; the optimal delay for transferring one data byte over the TDMA bus is 2.16ms; the worst case delay for transferring one data byte over the TDMA bus is 4.85ms.

While the invention has been described in terms of particular structures, devices and methods, those of skill in the art will understand based on the description herein that it is not limited merely to such examples and that the full scope of the invention is properly determined by the claims that follow.

## Claims

1. A method for communicating data between a first and a second plurality of communication devices over a TDMA bus having a plurality of time slots, said method comprising the steps of:

   receiving at least one asynchronous data channel with data from at least one of said first plurality of communication devices by a first TDMA interface,
   converting said at least one asynchronous data channel into a synchronous serial data stream and outputting said synchronous serial data stream into one of said plurality of time slots of said TDMA bus by said first TDMA interface,
   receiving said synchronous serial data stream in said one time slot of said TDMA bus by a second TDMA interface,
   converting said synchronous serial data stream into at least one asynchronous data channel and outputting said at least one asynchronous data channel to at least one of said second plurality of communication devices by said second TDMA interface,
   wherein said synchronous serial data stream has a frame structure with an address portion identifying said one of said first plurality of communication devices transmitting said asynchronous data channel and a data portion including said data from said asynchronous data channel.

2. Method according to claim 1, wherein said address portion comprises a predetermined first number of bits and said data portion comprises a predetermined second number of bits.

3. Method according to claim 1, wherein said address portion comprises a predetermined number of bits, said data portion comprises a variable number of bits, and said synchronous serial data stream comprises additionally a frame size portion specifying the variable number of bits of said data portion as a function of the amount of transmitted data.

4. Method according to any one of the preceding claims, wherein said data stream in the direction from said first plurality of communication devices to said second plurality of communication devices is output by said first TDMA interface into a first time slot of said TDMA bus and said data stream in the direction from said second plurality of communication devices to said first plurality of communication devices is output by said second TDMA interface into a second time slot of said TDMA bus.

5. Method according to any one of the preceding claims, wherein said address portion identifies said one of said second plurality of communication devices receiving said data channel.

6. Method according to any one of the preceding claims, wherein the data portion is interpreted as carrying no data when a predetermined sequence of bits occurs in said address portion.

7. TDMA interface for integrating a plurality of asynchronous data channels into one TDMA bus having a plurality of time slots, said TDMA interface comprising:

a TDMA bridge device having an internal parallel port for communicating parallel data over an internal parallel data bus and an external serial port for communicating serial data over said TDMA bus and for combining said parallel data on said internal parallel data bus to form a synchronous serial data stream on said TDMA bus, a plurality of asynchronous receiver transmitter means (UART), each having a first port for reading data in a parallel format from and writing data in a parallel format to said internal parallel data bus and a second port for reading data in a predetermined format from and writing data in said predetermined format to an external data bus, a parallel bus multiplexer for connecting selectively each of said asynchronous receiver transmitter means to said TDMA bridge device, wherein said TDMA bridge device provides said synchronous serial data stream at said external serial port in a predetermined first time slot of said TDMA bus and reads said synchronous serial data stream at said external serial port in a predetermined second time slot of said TDMA bus.

8. TDMA interface according to claim 7, further comprising a TDMA bus master controller for generating clock signals and synchronization signals for said TDMA bus.

9. TDMA interface according to claim 7 or 8, wherein said TDMA bridge device comprises a TDMA slot controller for reading said predetermined time slot of said TDMA bus,

a protocol encoder block for generating a request to a specific asynchronous receiver transmitter means for writing data to said internal parallel bus, setting the parallel bus multiplexer so as to connect said specific asynchronous receiver transmitter means with said TDMA bridge device and adding a protocol to said data from specific asynchronous receiver transmitter means and transmitting said data and protocol to said TDMA slot controller, and a protocol decoder for reading data from said TDMA slot controller and removing a protocol overhead and sending said data to the specific asynchronous receiver transmitter means configured by address received in the protocol data frame.

10. System for communicating data between a first and a second plurality of communication devices over a TDMA bus having a plurality of time slots, said system comprising:

a first TDMA interface for receiving at least one asynchronous data channel with data from at least one of said first plurality of communication devices and for converting said at least one asynchronous data channel into a synchronous serial data stream and outputting said synchronous serial data stream into one of said plurality of time slots of said TDMA bus, a second TDMA interface for receiving said synchronous serial data stream in said one time slot of said TDMA bus by and for converting said synchronous serial data stream into at least one asynchronous data channel and outputting said at least one asynchronous data channel to at least one of said second plurality of communication devices, wherein said synchronous serial data stream has a frame structure with an address portion identifying said one of said first plurality of communication devices transmitting said asynchronous data channel and a data portion including said data from said asynchronous data channel.

**11.** System according to claim 10, wherein said address portion comprises a predetermined first number of bits and said data portion comprises a predetermined second number of bits.

**12.** System according to claim 10, wherein said address portion comprises a predetermined number of bits, said data portion comprises a variable number of bits, and said synchronous serial data stream comprises additionally a frame size portion specifying the variable number of bits of said data portion as a function of the amount of transmitted data.

**13.** System according to any one of claims 10 to 12, wherein said data stream in the direction from said first plurality of communication devices to said second plurality of communication devices is output by said first TDMA interface into a first time slot of said TDMA bus and said data stream in the direction from said second plurality of communication devices to said first plurality of communication devices is output by said second TDMA interface into a second time slot of said TDMA bus.

**TDMA BUS**

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

| 2 | 1 | 0 | 1 | 0 | 31 | 30 | 29 | | 3 | 2 | 1 | 0 |
|---|---|---|---|---|----|----|----|---|---|---|---|---|

Address Bits    Frame Length              Data Bits

FIG. 19

FIG. 20

FIG. 21

FIG. 22

FIG. 23

FIG. 24

FIG. 25

FIG. 26

$t_{w10}$

IOW_b(n)

$t_{su10}$

DO

Valid data

$t_{h10}$

Data Write into the
UART

FIG. 27

$T_{sclk}$

SCLK

TTX

Valid data

Valid data

Start TX time slot

$t_{p15}$

TRX

Valid data

Valid data

$t_{d15}$

Read data

Read Data

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

FIG. 48

Chosen as
Midpoint of the
Bit

1 Bit period

16 X clock
period

FIG. 49

DITX1

DITX2

DITX15

MUX

DI

TDMA bus
multiplexer

IOR_b

FIG. 50

244.140625 ns => 4.096MHz

SCLK

SYNC

125us => 8kHz

DATA
SLOTS

63 | 0 | 1 | 2 | 3 | 62 | 63 | 0 | 1

244.140625 ns => 4.096 MHz

1.953125 us

SCLK

FIG. 51

Empty
Address

DATA
SLOTS

| | U1 | U1 U2 | U2 | U3 | U3 U4 | U4 | U5 | U5 U6 | U6 | U7 | U7 U8 | U8 | U9 | U9 U10 | U10 | U11 | U11 U12 | U12 | U13 | U13 U14 | U14 | U15 | U15 UX |

0 | 1 | 63 | 0 | 1 | 63 | 0 | 1 | 63

4* SCLK

8*64* SCLK | 8*64*SCLK | 8*64*SCLK

$D_{WAIT}$

FIG. 52

56

**European Patent Office**

## EUROPEAN SEARCH REPORT

Application Number

EP 00 11 1169

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 916 692 A (CLARKE GEORGE A ET AL) 10 April 1990 (1990-04-10) * column 1, line 67 - column 2, line 29 * * column 3, line 24-48 * * column 5, line 7-25 * * column 8, line 13-63 * | 1,2,4-8, 10,11,13 | H04L12/64 G06F13/40 H04L12/40 |
| A | US 4 959 833 A (HUANG SHIH-HSING ET AL) 25 September 1990 (1990-09-25) * column 2, line 56 - column 3, line 10 * | 1,7,10 | |
| A | US 5 696 949 A (YOUNG BRUCE) 9 December 1997 (1997-12-09) * abstract * * column 3, line 47-55 * | 1,7,10 | |
| A | WO 98 26509 A (DSC TELECOM LP) 18 June 1998 (1998-06-18) * abstract * | 1,7,10 | |
| A | EP 0 838 925 A (FUJITSU LTD) 29 April 1998 (1998-04-29) * abstract * | 1,7,10 | TECHNICAL FIELDS SEARCHED (Int.Cl.7) H04L G06F |

The present search report has been drawn up for all claims

| Place of search | Date of completion of the search | Examiner |
|---|---|---|
| THE HAGUE | 22 January 2001 | Dhondt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 11 1169

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2001

| Patent document cited in search report | | Publication date | Patent family member(s) | | Publication date |
|---|---|---|---|---|---|
| US 4916692 | A | 10-04-1990 | NONE | | |
| US 4959833 | A | 25-09-1990 | NONE | | |
| US 5696949 | A | 09-12-1997 | AU | 6281896 A | 15-01-1997 |
| | | | EP | 0832458 A | 01-04-1998 |
| | | | JP | 11514112 T | 30-11-1999 |
| | | | WO | 9700481 A | 03-01-1997 |
| | | | US | 5835784 A | 10-11-1998 |
| | | | US | 5954821 A | 21-09-1999 |
| WO 9826509 | A | 18-06-1998 | AU | 7851198 A | 03-07-1998 |
| EP 0838925 | A | 29-04-1998 | JP | 10178451 A | 30-06-1998 |
| | | | CN | 1180969 A | 06-05-1998 |

EPO FORM P0459

For more details about this annex : see Official Journal of the European Patent Office, No. 12/82